(19) Europäisches Patentamt
European Patent Office
Office européen des brevets

(11) **EP 4 443 112 A1**

(12) **EUROPEAN PATENT APPLICATION**
published in accordance with Art. 153(4) EPC


(43) Date of publication:
**09.10.2024 Bulletin 2024/41**

(21) Application number: **22901318.0**

(22) Date of filing: **29.11.2022**

(51) International Patent Classification (IPC):
***G01D 5/244*** *(2006.01)* ***B66B 3/02*** *(2006.01)*
***G01B 7/30*** *(2006.01)* ***G05B 11/36*** *(2006.01)*

(52) Cooperative Patent Classification (CPC):
**B66B 3/02; G01B 7/30; G01D 5/244; G05B 11/36**

(86) International application number:
**PCT/JP2022/044003**

(87) International publication number:
**WO 2023/100886 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 JP 2021194064**



(71) Applicant: **Nidec Corporation**
**Minami-ku, Kyoto-shi,**
**Kyoto 601-8205 (JP)**

(72) Inventors:
- **MURASE Shuhei**
**Kyoto-shi, Kyoto 601-8205 (JP)**
- **FUJITA Atsushi**
**Kyoto-shi, Kyoto 601-8205 (JP)**
- **KITANOYA Toru**
**Kyoto-shi, Kyoto 601-8205 (JP)**
- **TOKUNAGA Tomohisa**
**Kyoto-shi, Kyoto 601-8205 (JP)**

(74) Representative: **Viering, Jentschura & Partner mbB**
**Patent- und Rechtsanwälte**
**Grillparzerstraße 14**
**81675 München (DE)**


(54) **SIGNAL GENERATION DEVICE AND ELEVATOR**


(57) An aspect of a signal generation device of the present invention includes a processing device that calculates angle information indicating a mechanical angle of a rotary shaft, and generates a first signal in which a waveform of one electrical angle cycle appears N times (N is an integer of one or more) in one mechanical angle cycle, and a second signal different in phase by 90 degrees in electrical angle from the first signal, based on a calculation result of the angle information.


Fig. 1

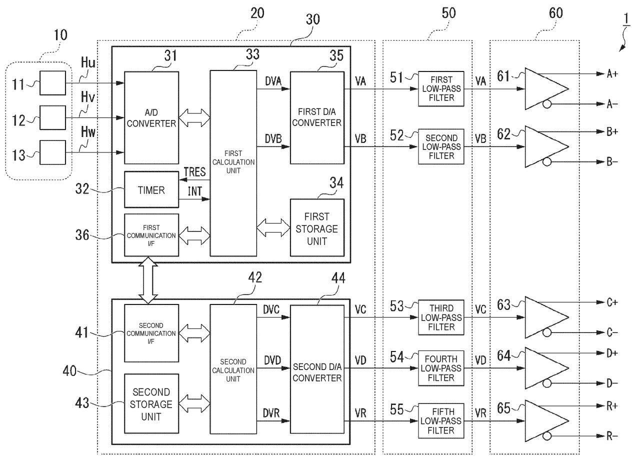





Processed by Luminess, 75001 PARIS (FR)

**Description**

TECHNICAL FIELD

The present invention relates to a signal generation device and an elevator.
The present application claims priority based on Japanese Patent Application No. 2021-194064 filed in Japan on November 30, 2021, the contents of which are incorporated herein by reference.

BACKGROUND ART

Optical encoders are generally known in each of which an A-phase signal and a B-phase signal, which are different in phase by 90 degrees in electrical angle, are output as analog signals being substantially sinusoidal waves. Additionally, magnetic encoders each using a magnetoresistive element and a magnetic recording medium are also known as disclosed in Patent Literatures 1 and 2.
Patent Literature 1 discloses a technique of controlling an applied voltage of a magnetoresistive device by feedback control to suppress amplitude fluctuation of an A-phase signal and a B-phase signal output from a magnetic encoder, which are each a sinusoidal signal, based on a deviation between a maximum output voltage and a reference voltage of the sinusoidal signal. Patent Literature 2 discloses a technique to improve resolution of a magnetic encoder as follows: causing a magnetoresistive element to output a sinusoidal signal with less distortion by setting an interval between the magnetoresistive element and a magnetic recording medium to a predetermined value; converting the sinusoidal signal into a pulse waveform; and multiplying the pulse waveform using a multiplication circuit.

CITATIONS LIST

PATENT LITERATURES

Patent Literature 1: JP S63-070116 A
Patent Literature 2: JP H09-218053 A

SUMMARY OF INVENTION

TECHNICAL PROBLEMS

The optical encoders are composed of dedicated optical system components requiring microfabrication technique, and thus are expensive in many cases. Although the resolution is determined by the number of times (the number of cycles) of appearance of a waveform of one electrical angle cycle in each of the A-phase signal and the B-phase signal in one mechanical angle cycle, the number of cycles of the A-phase signal and the B-phase signal in the optical encoder depends on the number of scale tracks provided in a scale disk, and thus the resolution is difficult to be changed without changing hardware.
Magnetic encoders of a type using a magnetoresistive element and a magnetic recording medium may deteriorate in angle detection accuracy when distortion occurs in a sinusoidal signal due to uneven magnetization of the magnetic recording medium, for example. Mechanical encoders of this type are difficult to change resolution without changing hardware because the number of cycles of the A-phase signal and the B-phase signal depends on the magnetic recording medium.

SOLUTIONS TO PROBLEMS

An aspect of a signal generation device of the present invention includes a processing device that calculates angle information indicating a mechanical angle of a rotary shaft, and generates a first signal in which a waveform of one electrical angle cycle appears N times (N is an integer of one or more) in one mechanical angle cycle, and a second signal different in phase by 90 degrees in electrical angle from the first signal, based on a calculation result of the angle information.
An aspect of an elevator of the present invention includes: a car suspended by a rope; a hoisting machine that raises the car by hoisting the rope; and the signal generation device according to the above aspect that calculates angle information indicating a mechanical angle of a rotary shaft of the hoisting machine and generates at least the first signal and the second signal based on a calculation result of the angle information.

ADVANTAGEOUS EFFECTS OF INVENTION

The above aspect of the present invention enables the processing device to be composed of an inexpensive general-purpose microcomputer, and thus enables providing a signal generation device capable of generating at least the first signal and the second signal with a simple and low-cost configuration as compared with a conventional optical encoder. Although the number of cycles of the first signal and the second signal in the conventional optical encoder depends on the number of scale tracks provided in a scale disk, and thus resolution is difficult to be changed without changing hardware, the present invention enables the resolution to be changed without changing the hardware because the number of cycles N of the first signal and the second signal can be set by software. Additionally, the first signal and the second signal can be generated using a D/A converter generally mounted on a general-purpose microcomputer that can be used as a processing device, so that the first and second signals with less distortion can be generated.

BRIEF DESCRIPTION OF DRAWINGS

FIG. 1 is a block diagram schematically illustrating a configuration of a signal generation device according to an embodiment of the present invention.
FIG. 2 is a timing chart illustrating a temporal correspondence relationship among generation timing of an interrupt signal, change timing of an interrupt frequency, execution timing of interrupt processing, operation timing of an A/D converter, and execution timing of angle calculation processing.
FIG. 3 is a flowchart illustrating interrupt processing performed by a first calculation unit of a first processing device (main MPU).
FIG. 4 is an explanatory diagram regarding delay compensation of an absolute angle.
FIG. 5 is a diagram illustrating an example of an absolute angle function.
FIG. 6 is a flowchart illustrating signal generation processing performed by a second calculation unit of a second processing device (sub MPU).
FIG. 7 is a diagram illustrating an example of a waveform of a fifth signal (R-phase signal).
FIG. 8 is a diagram illustrating an example of a differential signal output from an output circuit of a signal generation device.
FIG. 9 is a diagram illustrating an example of waveforms of an A-phase signal, a B-phase signal, and an R-phase signal in a first embodiment.
FIG. 10 is an enlarged view of a region indicated by a reference numeral 200 in FIG. 9.
FIG. 11 is a block diagram schematically illustrating a configuration of a signal generation device in a second embodiment of the present invention.
FIG. 12 is a diagram illustrating an example of waveforms of an A-phase signal, a B-phase signal, and an output signal of a calculation circuit in the second embodiment.
FIG. 13 is a diagram illustrating an example of waveforms of an A-phase signal, a B-phase signal, and an R-phase signal in the second embodiment.
FIG. 14 is a diagram illustrating an appearance of an elevator that is an application example of the present invention.

DESCRIPTION OF EMBODIMENTS

Hereinafter, an embodiment of the present invention will be described in detail with reference to the drawings.

FIG. 1 is a block diagram schematically illustrating a configuration of a signal generation device 1 according to an embodiment of the present invention. As illustrated in FIG. 1, the signal generation device 1 according to the present embodiment includes a sensor unit 10, a processing device 20, a filter circuit 50, and an output circuit 60.

The sensor unit 10 includes three magnetic sensors 11, 12, and 13, for example. Each of the magnetic sensors 11, 12, and 13 is a Hall sensor that detects magnetic flux intensity changing in accordance with a rotation angle of a rotary shaft, and outputs an analog signal indicating a detection result of the magnetic flux intensity as a magnetic flux detection signal. The rotary shaft in the present embodiment is a rotor shaft of a three-phase brushless DC motor, for example. The three-phase brushless DC motor is equipped with a control board that supplies a drive current to a three-phase coil. The magnetic sensors 11, 12, and 13 are each disposed on the control board while facing a rotor magnet in an axial direction of the rotor shaft. When viewed from the axial direction of the rotor shaft, the magnetic sensors 11, 12, and 13 are disposed at regular intervals along a rotation direction of the rotor shaft. The regular interval is an interval of 120 degrees, for example.

The magnetic sensor 11 outputs a magnetic flux detection signal Hu indicating a detection result of magnetic flux intensity in a U-phase to the processing device 20. The magnetic sensor 12 outputs a magnetic flux detection signal Hv indicating a detection result of magnetic flux intensity in a V-phase to the processing device 20. The magnetic sensor 13 outputs a magnetic flux detection signal Hw indicating a detection result of magnetic flux intensity in a W-phase to the processing device 20. The three magnetic flux detection signals Hu, Hv, and Hw are each different in phase by 120 degrees in electrical angle.

The processing device 20 calculates angle information indicating a mechanical angle of a rotary shaft, and generates a first signal VA in which a waveform of one electrical angle cycle appears N times (N is an integer of one or more) in one mechanical angle cycle, and a second signal VB different in phase by 90 degrees in electrical angle from the first signal, based on a calculation result of the angle information. In the following description, the first signal VA may be referred to as an "A-phase signal", and the second signal VB may be referred to as a "B-phase signal". In the present embodiment, the A-phase signal VA is a sine wave signal, and the B-phase signal VB is a cosine wave signal.

The processing device 20 further generates a third signal VC in which a waveform of one electrical angle cycle appears once in one mechanical angle cycle, and a fourth signal VD different in phase by 90 degrees in electrical angle from the third signal VC, based on the calculation result of the angle information. In the following description, the third signal VC may be referred to as a "C-phase signal", and the fourth signal VD may be referred to as a "D-phase signal". In the present embodiment, the C-phase signal VC is a sine wave signal, and the D-phase signal VD is a cosine wave signal.

The processing device 20 further generates a fifth signal VR indicating a reference position of one mechanical angle cycle based on the calculation result of the angle information. In the following description, the fifth signal VR may be referred to as an "R-phase signal". The R-phase signal VR is a waveform that is bilaterally symmetrical within a range of $\pm\alpha$ degrees about a mechanical angle of 0 degrees as a center and that has a vertex appearing at a mechanical angle of 0 degrees. Available examples of a waveform of the R-phase signal VR include a waveform represented by a sigmoid function, a rectangular wave, a triangular wave, a sine wave, and the like.

The processing device 20 outputs the A-phase signal VA, the B-phase signal VB, the C-phase signal VC, the D-phase signal VD, and the R-phase signal VR to the filter circuit 50.

The processing device 20 includes a first processing device 30 that calculates angle information and generates the A-phase signal VA and the B-phase signal VB based on a calculation result of the angle information, and a second processing device 40 that generates the C-phase signal VC, the D-phase signal VD, and the R-phase signal VR based on the calculation result of the angle information obtained from the first processing device 30. The first processing device 30 and the second processing device 40 communicate the calculation result of the angle information to each other. The first processing device 30 and the second processing device 40 are each a processor IC such as a micro processing unit (MPU), for example. In the following description, the first processing device 30 may be referred to as a "main MPU", and the second processing device 40 may be referred to as a "sub MPU".

The main MPU 30 calculates the angle information indicating the mechanical angle of the rotary shaft based on the magnetic flux detection signals Hu, Hv, and Hw output from the sensor unit 10, and generates the A-phase signal VA and the B-phase signal VB based on a calculation result of the angle information. The main MPU 30 transmits the calculation result of the angle information to the sub MPU 40. The main MPU 30 includes an A/D converter 31, a timer 32, a first calculation unit 33, a first storage unit 34, a first D/A converter 35, and a first communication I/F 36.

The magnetic flux detection signals Hu, Hv, and Hw output from the sensor unit 10 are input to the A/D converter 31 of the main MPU 30. The A/D converter 31 converts each of the magnetic flux detection signals Hu, Hv, and Hw into digital data by sampling at a predetermined sampling frequency, and outputs digital data on the magnetic flux detection signals Hu, Hv, and Hw to the first calculation unit 33.

The timer 32 outputs an interrupt signal INT to the first calculation unit 33 at a predetermined cycle. Specifically, the timer 32 increments a timer count value in synchronization with a clock signal (not illustrated), and outputs the interrupt signal INT and resets the timer count value when the timer count value reaches a timer set value TRES. In this manner, the cycle at which the interrupt signal INT is output from the timer 32 is determined by the timer set value TRES. The timer set value TRES is set in the timer 32 by the first calculation unit 33.

The first calculation unit 33 is a processor core that performs various kinds of processing according to a program stored in advance in the first storage unit 34. Although details will be described later, when receiving the interrupt signal INT from the timer 32, the first calculation unit 33 executes interrupt processing of calculating an angle estimation value $\theta$est as angle information based on the digital data on the magnetic flux detection signals Hu, Hv, and Hw received from the A/D converter 31. The first calculation unit 33 generates an A-phase digital signal DVA and a B-phase digital signal DVB based on the calculation result of the angle estimation value $\theta$est and outputs the A-phase digital signal DVA and the B-phase digital signal DVB to the first D/A converter 35 during execution of the interrupt processing. The first calculation unit 33 also transmits digital data indicating the calculation result of the angle estimation value $\theta$est to the sub MPU 40 via the first communication I/F 36 during the execution of the interrupt processing.

The first storage unit 34 includes a nonvolatile memory that stores in advance programs, setting data, and the like necessary for causing the first calculation unit 33 to perform various kinds of processing, and a volatile memory that is used as a temporary storage destination of data when the first calculation unit 33 performs the various kinds of processing. Examples of the nonvolatile memory include an electrically erasable programmable read-only memory (EEPROM) and a flash memory. Examples of the volatile memory include a random access memory (RAM).

The first D/A converter 35 is a two-channel D/A converter, for example. The first D/A converter 35 generates the A-phase signal VA by converting the A-phase digital signal DVA output from the first calculation unit 33 into an analog signal. The first D/A converter 35 generates the B-phase signal VB by converting the B-phase digital signal DVB output from the first calculation unit 33 into an analog signal. The first D/A converter 35 outputs the A-phase signal VA and the B-phase signal VB to the filter circuit 50.

The first communication I/F 36 is a serial communication interface that communicates with a second communication I/F 41 of the sub MPU 40 in conformity with a serial peripheral interface (SPI) communication standard, for example. The first communication I/F 36 transmits digital data output from the first calculation unit 33 to the second communication I/F 41 of the sub MPU 40. The first communication I/F 36 receives the digital data transmitted from the second communication I/F 41 of the sub MPU 40, and outputs the received digital data to the first calculation unit 33. The digital data transmitted from the first calculation unit 33 to the sub MPU 40 via the first communication I/F 36 includes digital data indicating the calculation result of the angle estimation value θest.

The sub MPU 40 generates the C-phase signal VC, the D-phase signal VD, and the R-phase signal VR based on the calculation result of the angle information transmitted from the main MPU 30, or the calculation result of the angle estimation value θest. The sub MPU 40 includes the second communication I/F 41, a second calculation unit 42, a second storage unit 43, and a second D/A converter 44.

The second communication I/F 41 is a serial communication interface that communicates with the first communication I/F 36 of the main MPU 30 in conformity with the SPI communication standard, for example. The second communication I/F 41 transmits digital data output from the second calculation unit 42 to the first communication I/F 36 of the main MPU 30. The second communication I/F 41 receives the digital data transmitted from the first communication I/F 36 of the main MPU 30, and outputs the received digital data to the second calculation unit 42.

The second calculation unit 42 is a processor core that performs various kinds of processing according to a program stored in advance in the second storage unit 43. When receiving the calculation result of the angle estimation value θest from the main MPU 30 via the second communication I/F 41, the second calculation unit 42 generates a C-phase digital signal DVC, a D-phase digital signal DVD, and an R-phase digital signal DVR based on the received calculation result of the angle estimation value θest, and outputs them to the second D/A converter 44.

The second storage unit 43 includes a nonvolatile memory that stores in advance programs, setting data, and the like necessary for causing the second calculation unit 42 to perform various kinds of processing, and a volatile memory that is used as a temporary storage destination of data when the second calculation unit 42 performs the various kinds of processing. Examples of the nonvolatile memory includes an EEPROM and a flash memory. Examples of the volatile memory include a RAM.

The second D/A converter 44 is a three-channel D/A converter, for example. The second D/A converter 44 generates the C-phase signal VC by converting the C-phase digital signal DVC output from the second calculation unit 42 into an analog signal. The second D/A converter 44 generates the D-phase signal VD by converting the D-phase digital signal DVD output from the second calculation unit 42 into an analog signal. The second D/A converter 44 generates the R-phase signal VR by converting the R-phase digital signal DVR output from the second calculation unit 42 into an analog signal. The second D/A converter 44 outputs the C-phase signal VC and the D-phase signal VD, and the R-phase signal VR to the filter circuit 50.

The filter circuit 50 includes a first low-pass filter 51, a second low-pass filter 52, a third low-pass filter 53, a fourth low-pass filter 54, and a fifth low-pass filter 55. The first low-pass filter 51, the second low-pass filter 52, the third low-pass filter 53, the fourth low-pass filter 54, and the fifth low-pass filter 55 are each a secondary RC low-pass filter, for example.

The first low-pass filter 51 is provided in a transmission path of the A-phase signal VA output from the main MPU 30 of the processing device 20. The first low-pass filter 51 passes frequency components equal to or lower than a predetermined cutoff frequency among frequency components included in the A-phase signal VA output from the main MPU 30 to the output circuit 60. The first low-pass filter 51 outputs a signal having a sine waveform smoother than that of the A-phase signal VA received by the first low-pass filter 51. Although the signal output from the first low-pass filter 51 is different from the A-phase signal VA received by the first low-pass filter 51 as described above, the signal output from the first low-pass filter 51 is also referred to as an "A-phase signal VA" in the present embodiment for convenience of description.

The second low-pass filter 52 is provided in a transmission path of the B-phase signal VB output from the main MPU 30 of the processing device 20. The second low-pass filter 52 passes frequency components equal to or lower than a predetermined cutoff frequency among frequency components included in the B-phase signal VB output from the main MPU 30 to the output circuit 60. The second low-pass filter 52 outputs a signal having a sine waveform smoother than that of the B-phase signal VB received by the second low-pass filter 52. Although the signal output from the second low-pass filter 52 is different from the B-phase signal VB received by the second low-pass filter 52 as described above, the signal output from the second low-pass filter 52 is also referred to as a "B-phase signal VB" in the present embodiment for convenience of description.

The third low-pass filter 53 is provided in a transmission path of the C-phase signal VC output from the sub MPU 40 of the processing device 20. The third low-pass filter 53 passes frequency components equal to or lower than a predetermined cutoff frequency among frequency components included in the C-phase signal VC output from the sub MPU 40 to the output circuit 60. The third low-pass filter 53 outputs a signal having a sine waveform smoother than that of the C-phase signal VC received by the third low-pass filter 53. Although the signal output from the third low-pass filter 53 is different from the C-phase signal VC received by the third low-pass filter 53 as described above, the signal output from the third low-pass filter 53 is also referred to as a "C-phase signal VC" in the present embodiment for convenience of description.

The fourth low-pass filter 54 is provided in a transmission path of the D-phase signal VD output from the sub MPU 40 of the processing device 20. The fourth low-pass filter 54 passes frequency components equal to or lower than a predetermined cutoff frequency among frequency components included in the D-phase signal VD received from the sub MPU 40 to the output circuit 60. The fourth low-pass filter 54 outputs a signal having a sine waveform smoother than that of the D-phase signal VD received by the fourth low-pass filter 54. Although the signal output from the fourth low-pass filter 54 is different from the D-phase signal VD received by the fourth low-pass filter 54 as described above, the signal output from the fourth low-pass filter 54 is also referred to as a "D-phase signal VD" in the present embodiment for convenience of description.

The fifth low-pass filter 55 is provided in a transmission path of the R-phase signal VR output from the sub MPU 40 of the processing device 20. The fifth low-pass filter 55 passes frequency components equal to or lower than a predetermined cutoff frequency among frequency components included in the R-phase signal VR output from the sub MPU 40 to the output circuit 60. The fifth low-pass filter 55 outputs a signal having a sine waveform smoother than that of the R-phase signal VR received by the fifth low-pass filter 55. Although the signal output from the fifth low-pass filter 55 is different from the R-phase signal VR received by the fifth low-pass filter 55 as described above, the signal output from the fifth low-pass filter 55 is also referred to as an "R-phase signal VR" in the present embodiment for convenience of description.

The output circuit 60 generates and outputs a differential signal of each of the A-phase signal VA, the B-phase signal VB, the C-phase signal VC, the D-phase signal VD, and the R-phase signal VR output from the filter circuit 50. The output circuit 60 includes a first differential output circuit 61, a second differential output circuit 62, a third differential output circuit 63, a fourth differential output circuit 64, and a fifth differential output circuit 65.

The first differential output circuit 61 generates a differential signal of the A-phase signal VA received from the first low-pass filter 51. The differential signal output from the first differential output circuit 61 includes a positive side A-phase signal A+ in phase with the A-phase signal VA input from the first low-pass filter 51 to the first differential output circuit 61, and a negative side A-phase signal A- in opposite phase with the positive side A-phase signal A+.

The second differential output circuit 62 generates a differential signal of the B-phase signal VB output from the second low-pass filter 52. The differential signal output from the second differential output circuit 62 includes a positive side B-phase signal B+ in phase with the B-phase signal VB input from the second low-pass filter 52 to the second differential output circuit 62, and a negative side B-phase signal B- in opposite phase with the positive side B-phase signal B+.

The third differential output circuit 63 generates a differential signal of the C-phase signal VC output from the third low-pass filter 53. The differential signal output from the third differential output circuit 63 includes a positive side C-phase signal C+ in phase with the C-phase signal VC input from the third low-pass filter 53 to the third differential output circuit 63, and a negative side C-phase signal C- in opposite phase with the positive side C-phase signal C+.

The fourth differential output circuit 64 generates a differential signal of the D-phase signal VD received from the fourth low-pass filter 54. The differential signal output from the fourth differential output circuit 64 includes a positive side D-phase signal D+ in phase with the D-phase signal VD input from the fourth low-pass filter 54 to the fourth differential output circuit 64, and a negative side D-phase signal D- in opposite phase with the positive side D-phase signal D+.

The fifth differential output circuit 65 generates a differential signal of the R-phase signal VR output from the fifth low-pass filter 55. The differential signal output from the fifth differential output circuit 65 includes a positive side R-phase signal R+ in phase with the R-phase signal VR input from the fifth low-pass filter 55 to the fifth differential output circuit 65, and a negative side R-phase signal R- in opposite phase with the positive side R-phase signal R+.

Hereinafter, operation of the signal generation device 1 configured as described above will be described in detail with reference to FIGS. 2 to 8.

When the signal generation device 1 is switched from a power-off state to a power-on state, each of the first calculation unit 33 of the main MPU 30 and the second calculation unit 42 of the sub MPU 40 performs predetermined initialization processing. For example, the first calculation unit 33 reads out the timer set value TRES of the timer 32 from the first storage unit 34 as one piece of the initialization processing, and sets the readout timer set value TRES in the timer 32. The first calculation unit 33 also resets a value of an interrupt frequency count to be described later to "0" as one piece of the initialization processing.

FIG. 2 is a timing chart illustrating a temporal correspondence relationship among generation timing of the interrupt signal INT, change timing of the interrupt frequency count, execution timing of the interrupt processing, operation timing of the A/D converter 31, and execution timing of angle calculation processing. When the timer reset value TRES is set in the timer 32, the timer 32 increments the timer count value in synchronization with a clock signal not illustrated, and when the timer count value reaches the timer reset value TRES, the timer 32 outputs the interrupt signal INT and resets the timer count value. As a result, the timer 32 outputs the interrupt signal INT at a predetermined cycle $T_{INT}$ as illustrated in FIG. 2.

As illustrated in FIG. 2, the first calculation unit 33 performs the interrupt processing every time the interrupt signal INT occurs. In a case where the interrupt frequency count, which is the number of times of occurrence of the interrupt signal INT, is equal to an initial value "0" at the start of the interrupt processing, the first calculation unit 33 performs predetermined short-period processing after executing predetermined long-period processing. On the other hand, in a case where the interrupt frequency count is not equal to the initial value "0", the first calculation unit 33 performs the short-period processing without executing the long-period processing.

As illustrated in FIG. 2, when exceeding a maximum value "Cm", the interrupt frequency count is reset to the initial value "0". The interrupt frequency count is reset in a cycle $T_{period}$ as described above, the cycle $T_{period}$ being referred to as a "control cycle". The control cycle $T_{period}$ is expressed by the following Expression (1). The long-period processing included in the interrupt processing is repeatedly executed in a cycle equal to the control cycle $T_{period}$. The short-period processing included in the interrupt processing is repeatedly executed in a cycle equal to an occurrence cycle $T_{INT}$ of the interrupt signal INT.

$$T_{period} = (Cm + 1) \times T_{INT} \quad ... \quad (1)$$

When the rotary shaft rotates, the magnetic flux detection signals Hu, Hv, and Hw different in phase by 120 degrees from each other in electrical angle are output from the sensor unit 10. As illustrated in FIG. 2, the A/D converter 31 starts digital conversion of the magnetic flux detection signals Hu, Hv, and Hw when the interrupt frequency count is the initial value "0", and ends the digital conversion when the interrupt frequency count is "2", for example. That is, digital data on the magnetic flux detection signals Hu, Hv, and Hw in one control cycle are obtained in a period where the interrupt frequency count changes from the initial value "0" to "2". As illustrated in FIG. 2, upon acquiring the digital data on the magnetic flux detection signals Hu, Hv, and Hw, the first calculation unit 33 executes the angle calculation processing in a period where the interrupt processing is not executed.

The first calculation unit 33 calculates an absolute angle θ (mechanical angle) of the rotary shaft based on the digital data on the magnetic flux detection signals Hu, Hv, and Hw in the angle calculation processing. As a calculation algorithm for the absolute angle θ, for example, an algorithm described in Japanese Patent No. 6233532 can be used. Thus, an explanation on the calculation algorithm for the absolute angle θ is omitted in the present description. However, the calculation algorithm for the absolute angle θ is not limited to the algorithm described in Japanese Patent No. 6233532. Another calculation algorithm may be used as long as the algorithm can calculate the absolute angle of the rotary shaft.

As illustrated in FIG. 2, when the interrupt frequency count is the maximum value "Cm", the angle calculation processing executed within one control cycle ends. Upon ending the angle calculation processing, the first calculation unit 33 substitutes a calculation result of the absolute angle θ into a global variable gwTheta. The global variable gwTheta indicating the absolute angle θ has a value that is rewritten to a new value in a cycle that is equal to the control cycle $T_{period}$. In other words, the control cycle $T_{period}$ is a cycle in which the absolute angle θ of the rotary shaft is updated.

FIG. 3 is a flowchart illustrating interrupt processing executed by the first calculation unit 33. As described above, when receiving the interrupt signal INT from the timer 32, the first calculation unit 33 executes the interrupt processing illustrated in FIG. 3. As illustrated in FIG. 3, upon starting the interrupt processing, the first calculation unit 33 first determines whether the interrupt frequency count is equal to the initial value "0" (step S1). When the determination is "Yes" in step S1, or when the interrupt frequency count is equal to the initial value "0", the first calculation unit 33 proceeds to processing in step S2. In contrast, when the determination is "No" in step S1, or when the interrupt frequency count is not equal to the initial value "0", the first calculation unit 33 proceeds to processing in step S5.

The interrupt processing illustrated in FIG. 3 includes processing from step S2 to step S4 that is the long-period processing. The interrupt processing illustrated in FIG. 3 includes processing from step S5 to step S11 that is the short-period processing. That is, when the interrupt frequency count is equal to the initial value "0", the first calculation unit 33 executes the long-period processing including the processing from step S2 to step S4, and then executes the short-period processing including the processing from step S5 to step S11. In contrast, when the interrupt frequency count is not equal to the initial value "0", the first calculation unit 33 executes the short-period processing without executing the long-period processing.

The first calculation unit 33 executes an angle acquisition processing of acquiring a current value of the absolute angle θ of the rotary shaft as one processing of the long-period processing (step S2). Specifically, the first calculation unit 33 acquires a value of the global variable gwTheta as a current value Theta of the absolute angle θ in step S2. As illustrated in FIG. 2, the current value Theta of the absolute angle θ is a value of the absolute angle θ calculated in a control cycle immediately before a current control cycle.

Next, as one processing of the long-period processing, the first calculation unit 33 executes function calculation processing of calculating an absolute angle function expressing the absolute angle θ as a linear function of time based on the current value Theta of the absolute angle θ and a previous value Theta_prev of the absolute angle θ (steps S3 and S4). The previous value Theta_prev of the absolute angle θ is a value of the absolute angle θ calculated in a control cycle before a cycle immediately before the current control cycle.

Specifically, as one of the function calculation processing, the first calculation unit 33 executes intercept calculation processing of calculating an intercept of the absolute angle function by executing delay compensation on the current value Theta of the absolute angle θ (step S3). The current value Theta of the absolute angle θ includes a time delay component as described below. As described above, the current value Theta of the absolute angle θ is a value of the absolute angle θ calculated in the control cycle immediately before the current control cycle. Thus, the current value Theta of the absolute angle θ has a time delay corresponding to one control cycle. The current value Theta of the absolute angle θ has a time delay caused by a response delay of the magnetic sensors 11, 12, and 13. Additionally, when a low-pass filter is provided for the magnetic flux detection signals Hu, Hv, and Hw, the current value Theta of the absolute angle θ has a time delay caused by frequency characteristics of the low-pass filter.

In step S3, the first calculation unit 33 performs delay compensation on the current value Theta of the absolute angle θ having a time delay component as described above. In FIG. 4, θ is an absolute angle θ calculated by angle calculation processing, $\theta_{true}$ is a true value of the absolute angle θ, and $\theta_{new}$ is an absolute angle θ subjected to delay compensation. As illustrated in FIG. 4, when a time delay $T_{delay}$ exists at the absolute angle θ, an angle error $\theta_{delay}$ occurs at the absolute angle θ with respect to the true value $\theta_{new}$. In this case, the delay-compensated absolute angle $\theta_{new}$ is expressed by Expression (2) below. In Expression (2) below, θ(k) is equal to the current value Theta of the absolute angle θ, and θ(k-1) is equal to the previous value Theta_prev of the absolute angle θ. In Expression (2) below, the second term on the right side is equal to the angle error $\theta_{delay}$.

[Expression 1]

$$\theta_{new}(k) = \theta(k) + \frac{T_{delay}}{T_{period}}\{\theta(k) - \theta(k-1)\} \quad \cdots (2)$$

In step S3, the first calculation unit 33 calculates, the delay-compensated absolute angle $\theta_{new}$ based on Expression (2) above as an intercept of the absolute angle function. The first calculation unit 33 acquires the calculation result of the delay compensated absolute angle $\theta_{new}$ as an intercept Theta_new_low. As the time delay $T_{delay}$ included in Expression (2) above, a calculation value obtained by executing a simulation in consideration of a factor of the time delay described above may be used, or an actual measurement value obtained by performing an experiment may be used.

Next, as one of the function calculation processing, the first calculation unit 33 executes slope calculation processing of calculating a slope of the absolute angle function by subtracting the previous value Theta_prev from the current value Theta of the absolute angle θ (step S4). Specifically, the first calculation unit 33 calculates a slope Theta_extr of the absolute angle function based on Expression (3) below in step S4.

```
Theta_extr = Theta - Theta_prev ... (3)
```

When the first calculation unit 33 executes the function calculation processing including steps S3 and S4 described above, an absolute angle function θ(count) expressed by Expression (4) below is finally obtained.

$$\theta(\text{count}) = \text{Theta_new_low} + \text{Theta_extr}/(\text{Cm} + 1) \times \text{count} \quad (4)$$

The above processing from step S2 to step S4 is the long-period processing repeatedly executed in a cycle equal to the control cycle $T_{period}$. Subsequently, the short-period processing will be described.

As one of the short-period processing, the first calculation unit 33 executes an angle estimation value calculation processing of calculating an estimation value of the absolute angle θ as the angle estimation value θest based on the absolute angle function calculated by the function calculation processing (step S5). Specifically, the first calculation unit 33 acquires a value of θ (count) calculated by substituting a current value of the interrupt frequency count into Expression (4) above as the angle estimation value θest in step S5.

In FIG. 5, a straight line L indicates an example of the absolute angle function θ (count) calculated when the interrupt frequency count is "0" in any one control cycle. The straight line L has a slope that is the slope Theta_extr of the absolute angle function θ(count). The straight line L has a value at a point P0, the value being the angle estimation value θest calculated when the interrupt frequency count is "0". The value at the point P0 is equal to the intercept Theta_new_low of the absolute angle function θ(count). The straight line L has a value at a point P2, the value being the angle estimation value θest calculated when the interrupt frequency count is "2". The straight line L has a value at a point P3, the value being the angle estimation value θest calculated when the interrupt frequency count is "3". The straight line L has a value at a point P5, the value being the angle estimation value θest calculated when the interrupt frequency count is "5". The straight line L has a value at a point P7, the value being the angle estimation value θest calculated when the interrupt frequency count is "7".

Upon calculating the angle estimation value θest corresponding to the value of the current interrupt frequency count based on the absolute angle function θ (count) obtained by the long-period processing as described above, the first calculation unit 33 calculates an instantaneous value Va of the A-phase signal VA based on Expression (5) below (step S6) and calculates an instantaneous value Vb of the B-phase signal VB based on Expression (6) below (step S7). In Expressions (5) and (6), K and N are each a constant. N is the number of appearances (the number of cycles) of a waveform of one electrical angle cycle in each of the A-phase signal VA and the B-phase signal VB in one mechanical angle cycle. As described above, the resolution is determined by the number of cycles N of each of the A-phase signal VA and the B-phase signal VB. For example, N is 2048.

$$Va = K \cdot \sin (N \times \theta est) \ldots (5)$$

$$Vb = K \cdot \cos (N \times \theta est) \ldots (6)$$

The first calculation unit 33 outputs digital data indicating the calculation result of the instantaneous value Va of the A-phase signal VA to the first D/A converter 35 as the A-phase digital signal DVA, and outputs digital data indicating the calculation result of the instantaneous value Vb of the B-phase signal VB to the first D/A converter 35 as the B-phase digital signal DVB. The first calculation unit 33 may acquire the instantaneous value Va of the A-phase signal VA and the instantaneous value Vb of the B-phase signal VB corresponding to the angle estimation value θest by referring to table data stored in advance in the first storage unit 34.

Then, the first calculation unit 33 transmits digital data indicating the calculation result of the angle estimation value θest to the sub MPU 40 via the first communication I/F 36 (step S8). After executing processing in step S8, the first calculation unit 33 executes interrupt frequency update processing of updating the interrupt frequency count (step S9). Specifically, the first calculation unit 33 increments the value of the interrupt frequency count in step S9.

Next, the first calculation unit 33 determines whether the interrupt frequency count is equal to a predetermined threshold value Cth (step S10). The threshold value Cth is obtained by adding "1" to the maximum value "Cm" of the interrupt frequency count. When the determination is "Yes" in step S10, or when the interrupt frequency count is equal to the threshold value Cth (= Cm + 1), the first calculation unit 33 resets the interrupt frequency count to the initial value "0" and ends the interrupt processing (step S11). In contrast, when the determination is "No" in step S10, or when the interrupt frequency count is not equal to the threshold value Cth, the first calculation unit 33 ends the interrupt processing without executing processing in step S11.

When the first calculation unit 33 repeatedly executes interrupt processing as described above in the occurrence cycle TINT of the interrupt signal INT, the A-phase signal VA that is an analog signal of a sine wave and the B-phase signal VB that is an analog signal of a cosine wave (or the B-phase signal VB different in phase by 90 degrees in electrical angle from the A-phase signal VA) are output from the first D/A converter 35 to the filter circuit 50. For example, when the number of cycles N of each of the A-phase signal VA and the B-phase signal VB is 2048, a waveform of one electrical angle cycle appears 2048 times in each of the A-phase signal VA and the B-phase signal VB output in one mechanical angle cycle, or in a period in which the angle estimation value θest changes from 0 degrees to 360 degrees.

When the first calculation unit 33 repeatedly executes interrupt processing as described above in the occurrence cycle $T_{INT}$ of the interrupt signal INT, digital data indicating the calculation result of the angle estimation value θest is transmitted from the main MPU 30 to the sub MPU 40 in substantially the same cycle as the occurrence cycle $T_{INT}$ of the interrupt signal INT.

FIG. 6 is a flowchart illustrating signal generation processing executed by a second calculation unit 42 of the sub MPU 40. As illustrated in FIG. 6, the second calculation unit 42 determines whether the calculation result of the angle estimation value θest is received from the main MPU 30 via the second communication I/F 41 (step S21). When the determination is "No" in step S21, the second calculation unit 42 repeats processing in step S21 at regular time intervals, and waits until receiving the calculation result of the angle estimation value θest from the main MPU 30.

When the determination is "Yes" in step S21, or when the calculation result of the angle estimation value θest is received from the main MPU 30, the second calculation unit 42 calculates the instantaneous value Vc of the C-phase signal VC based on Expression (7) below (step S22) and calculates the instantaneous value Vd of the D-phase signal VD based on Expression (8) below (step S23). In Expressions (7) and (8), K is a constant.

$$Vc = K \cdot \sin(\theta est) \quad ... (7)$$

$$Vd = K \cdot \cos(\theta est) \quad ... (8)$$

The second calculation unit 42 outputs digital data indicating the calculation result of the instantaneous value Vc of the C-phase signal VC to the second D/A converter 44 as the C-phase digital signal DVC, and outputs digital data indicating the calculation result of the instantaneous value Vd of the D-phase signal VD to the second D/A converter 44 as the D-phase digital signal DVD. The second calculation unit 42 may acquire the instantaneous value Vd of the C-phase signal VC and the instantaneous value Vd of the D-phase signal VD corresponding to the angle estimation value θest by referring to table data stored in advance in the second storage unit 43.

The second calculation unit 42 further calculates an instantaneous value Vr of the R-phase signal VR based on a predetermined function (step S24). As illustrated in FIG. 7, the R-phase signal VR is a waveform that is bilaterally symmetrical within the range of ±α degrees about the mechanical angle of 0 degrees (0 degrees of the angle estimation value θest in this case) and has a vertex appearing at the mechanical angle of 0 degrees. FIG. 7 illustrates an example of a waveform obtained when the instantaneous value Vr of the R-phase signal VR is calculated based on the sigmoid function. When the number of cycles N is 2048, for example, α may be determined as expressed by Expression (9) below.

$$\alpha = 360/2048 = 0.17578 \text{ (deg)} \quad ... (9)$$

The second calculation unit 42 outputs digital data indicating the calculation result of the instantaneous value Vr of the R-phase signal VR to the second D/A converter 44 as the R-phase digital signal DVR. The second calculation unit 42 may acquire the instantaneous value Vr of the R-phase signal VR corresponding to the angle estimation value θest by referring to table data stored in advance in the second storage unit 43. After step S24 ends, the second calculation unit 24 returns to step S21 and waits until receiving a next calculation result of the angle estimation value θest from the main MPU 30.

When the second calculation unit 42 executes signal generation processing as described above every time the angle estimation value θest is received from the main MPU 30, the C-phase signal VC being an analog signal of a sine wave and the D-phase signal VD being an analog signal of a cosine wave (or the D-phase signal VD different in phase by 90 degrees in electrical angle from the C-phase signal VC) are output from the second D/A converter 44 to the filter circuit 50. A waveform of one electrical angle cycle appears once in each of the C-phase signal VC and the D-phase signal VD output in one mechanical angle cycle, or in the period in which the angle estimation value θest changes from 0 degrees to 360 degrees.

When the second calculation unit 42 executes signal generation processing as described above every time the angle estimation value θest is received from the main MPU 30, the R-phase signal VR being an analog signal indicating the reference position of one mechanical angle cycle, or a position where the angle estimation value θest becomes 0 degrees, is output from the second D/A converter 44 to the filter circuit 50.

As described above, the A-phase signal VA output from the main MPU 30 is shaped into a signal having a smooth sine waveform by the first low-pass filter 51 of the filter circuit 50, and is then input to the first differential output circuit 61 of the output circuit 60. The B-phase signal VB output from the main MPU 30 is shaped into a signal having a smooth cosine waveform by the second low-pass filter 52 of the filter circuit 50, and is then input to the second differential output circuit 62 of the output circuit 60.

The C-phase signal VC output from the sub MPU 40 is shaped into a signal having a smooth sine waveform by the third low-pass filter 53 of the filter circuit 50, and is then input to the third differential output circuit 63 of the output circuit 60. The D-phase signal VD output from the sub MPU 40 is shaped into a signal having a smooth cosine waveform by the fourth low-pass filter 54 of the filter circuit 50, and is then input to the fourth differential output circuit 64 of the output circuit 60. The R-phase signal VR output from the sub MPU 40 is shaped into a signal having a smooth waveform by the fifth low-pass filter 55 of the filter circuit 50, and is then input to the fifth differential output circuit 65 of the output circuit 60.

Then, the first differential output circuit 61 outputs the positive side A-phase signal A+ in phase with the A-phase signal VA input from the first low-pass filter 51 to the first differential output circuit 61, and the negative side A-phase signal A- in opposite phase with the positive side A-phase signal A+, as illustrated in FIG. 8. Similarly, the second differential output circuit 62 outputs the positive side B-phase signal B+ in phase with the B-phase signal VB input from the second low-pass filter 52 to the second differential output circuit 62, and the negative side B-phase signal B- in opposite phase with the positive side B-phase signal B+. For example, when the number of cycles N of each of the A-phase signal VA and the B-phase signal VB is 2048, a waveform of one electrical angle cycle appears 2048 times in each of the positive side A-phase signal A+, the negative side A-phase signal A-, the positive side B-phase signal B+, and the negative side B-phase signal B- output in the period in which the angle estimation value θest changes from 0 degrees to 360 degrees.

As illustrated in FIG. 8, the third differential output circuit 63 outputs the positive side C-phase signal C+ in phase with the C-phase signal VC input from the third low-pass filter 53 to the third differential output circuit 63, and the negative side C-phase signal C- in opposite phase with the positive side C-phase signal C+. Similarly, the fourth differential output circuit 64 outputs the positive side D-phase signal D+ in phase with the D-phase signal VD input from the fourth low-pass filter 54 to the fourth differential output circuit 64, and the negative side D-phase signal D- in opposite phase with the positive side D-phase signal D+. A waveform of one electrical angle cycle appears once in each of the positive side C-phase signal C+, the negative side C-phase signal C-, the positive side D-phase signal D+, and the negative side D-phase signal D- output in the period in which the angle estimation value θest changes from 0 degrees to 360 degrees.

As illustrated in FIG. 8, the fifth differential output circuit 65 outputs the positive side R-phase signal R+ in phase with the R-phase signal VR input from the fifth low-pass filter 55 to the fifth differential output circuit 65, and the negative side R-phase signal R- in opposite phase with the positive side R-phase signal R+. In the positive side R-phase signal R+ and the negative side R-phase signal R- output in the period in which the angle estimation value θest changes from 0 degrees to 360 degrees, a waveform, which is bilaterally symmetrical within the range of $\pm\alpha$ degrees about 0 degrees of the angle estimation value θest, appears once.

As described above, the signal generation device 1 of the present embodiment includes the processing device 20 that calculates the angle information indicating the mechanical angle of the rotary shaft, and generates the A-phase signal VA in which a waveform of one electrical angle cycle appears N times (N is an integer of one or more) in one mechanical angle cycle, and the B-phase signal VB different in phase by 90 degrees in electrical angle from the A-phase signal VA, based on a calculation result of the angle information.

The present embodiment enables the processing device 20 to be composed of an inexpensive general-purpose microcomputer, and thus enables providing the signal generation device 1 capable of generating at least the A-phase signal VA and the B-phase signal VB with a simple and low-cost configuration as compared with a conventional optical encoder. Although the number of cycles of the A-phase signal and the B-phase signal in the conventional optical encoder depends on the number of scale tracks provided in a scale disk, and thus resolution is difficult to be changed without changing hardware, the present embodiment enables the resolution to be changed without changing the hardware because the number of cycles N of the A-phase signal and the B-phase signal can be set by software. Additionally, the A-phase signal and the B-phase signal can be generated using a D/A converter generally mounted on a general-purpose microcomputer that can be used as the processing device 20, so that the A-phase signal and the B-phase signal with less distortion can be generated.

The signal generation device 1 of the present embodiment further includes the first low-pass filter 51 provided in the transmission path of the A-phase signal VA output from the processing device 20 and the second low-pass filter 52 provided in the transmission path of the B-phase signal VB output from the processing device 20.

This configuration enables obtaining the A-phase signal VA and the B-phase signal VB each having a smooth waveform from which a high frequency component caused by DA conversion using the processing device 20 is removed.

The signal generation device 1 of the present embodiment further includes the first differential output circuit 61 that generates a differential signal of the A-phase signal VA output from the first low-pass filter 51, and the second differential output circuit 62 that generates a differential signal of the B-phase signal VB output from the second low-pass filter 52.

As described above, outputting the A-phase signal VA and the B-phase signal VB as differential signals enables a counterpart device to acquire the A-phase signal VA and the B-phase signal VB in which in-phase noise is reduced.

The processing device 20 in the present embodiment further generates the C-phase signal VC in which a waveform of one electrical angle cycle appears once in one mechanical angle cycle, and the D-phase signal VD different in phase by 90 degrees in electrical angle from the C-phase signal VC, based on the calculation result of the angle information.

The C-phase signal VC and the D-phase signal VD can be used to detect an absolute position using the counterpart device. Although it is difficult to determine the absolute position in one mechanical angle cycle only with the A-phase signal VA and the B-phase signal VB, a waveform of one electrical angle cycle appears once in one mechanical angle cycle in the C-phase signal VC and the D-phase signal VD, and thus enabling determination of the absolute position in one mechanical angle cycle using the C-phase signal VC and the D-phase signal VD.

The signal generation device 1 of the present embodiment further includes the third low-pass filter 53 provided in the transmission path of the C-phase signal VC output from the processing device 20 and the fourth low-pass filter 54 provided in the transmission path of the D-phase signal VD output from the processing device 20.

This configuration enables obtaining the C-phase signal VC and the D-phase signal VD each having a smooth waveform from which a high frequency component caused by DA conversion using the processing device 20 is removed.

The signal generation device 1 of the present embodiment further includes the third differential output circuit 63 that generates a differential signal of the C-phase signal VC output from the third low-pass filter 53, and the fourth differential output circuit 64 that generates a differential signal of the D-phase signal VD output from the fourth low-pass filter 54.

As described above, outputting the C-phase signal VC and the D-phase signal VD as differential signals enables the counterpart device to acquire the C-phase signal VC and the D-phase signal VD in which in-phase noise is reduced.

The processing device 20 in the present embodiment further generates the R-phase signal VR indicating the reference position of one mechanical angle cycle based on the calculation result of the angle information.

This configuration enables providing the R-phase signal VR indicating the reference position of one mechanical angle cycle (e.g., a position of 0 degrees in the mechanical angle) to the counterpart device.

The processing device 20 in the present embodiment includes the first processing device 30 that calculates angle information and generates the A-phase signal VA and the B-phase signal VB based on a calculation result of the angle information, and the second processing device 40 that generates the C-phase signal VC, the D-phase signal VD, and the R-phase signal VR based on the calculation result of the angle information obtained from the first processing device 30.

This configuration enables an inexpensive general-purpose microcomputer having a two-channel D/A converter to be used as the first processing device 30, and an inexpensive general-purpose microcomputer having a three-channel D/A converter to be used as the second processing device 40.

The first processing device 30 and the second processing device 40 in the present embodiment communicate the calculation result of the angle information to each other.

As a result, when the first processing device 30 is provided with a function of calculating the angle information, for example, the first processing device 30 may transmit the calculation result of the angle information to the second processing device 40, and thus the second processing device 40 is not required to be provided with the function of calculating the angle information. That is, a calculation load of a processor core of the second processing device 40 is reduced, so that a less expensive general-purpose microcomputer with low specifications can be used as the second processing device 40.

The signal processing device 1 of the present embodiment further includes the fifth low-pass filter 55 provided in the transmission path of the R-phase signal VR output from the processing device 20.

This configuration enables obtaining the R-phase signal VR having a smooth waveform from which a high frequency component caused by DA conversion using the processing device 20 is removed.

The signal processing device 1 of the present embodiment further includes the fifth differential output circuit 65 that generates a differential signal of the R-phase signal VR output from the fifth low-pass filter 55.

As described above, outputting the R-phase signal VR as a differential signal enables the counterpart device to acquire the R-phase signal VR in which in-phase noise is reduced.

The signal processing device 1 of the present embodiment further includes the plurality of magnetic sensors 11, 12, and 13 each of which detects a change in magnetic flux due to rotation of the rotary shaft, and the processing device 20 calculates angle information based on signals output from the plurality of magnetic sensors 11, 12, and 13.

This configuration enables providing a magnetic encoder capable of generating at least the A-phase signal VA and the B-phase signal VB with a simple and low-cost configuration as compared with the conventional optical encoder.

[Second embodiment]

Next, a second embodiment of the present invention will be described.

FIG. 9 is a diagram illustrating an example of waveforms of the A-phase signal VA, the B-phase signal VB, and the R-phase signal VR in the first embodiment. FIG. 9 shows a range W1 that corresponds to a range of $\pm\alpha$ degrees about 0 degrees of the angle estimation value $\theta$est illustrated in FIG. 7. FIG. 10 is an enlarged view of a region indicated by a reference numeral 200 in FIG. 9.

As illustrated in FIG. 10, the sub MPU 40 in the first embodiment receives the angle estimation value $\theta$est from the main MPU 30 and calculates the instantaneous value Vr of the R-phase signal VR based on the predetermined function to result in causing a delay time that causes a synchronization deviation $\Delta\theta$ of the R-phase signal VR with respect to the A-phase signal VA and the B-phase signal VB. The synchronization deviation $\Delta\theta$ is a deviation of a mechanical angle generated between an intersection point P20 of the A-phase signal VA and the B-phase signal VB, and a vertex P30 of the R-phase signal VR. The synchronization deviation $\Delta\theta$ is desirably as small as possible.

In the second embodiment, a signal generation device 1A capable of reducing the synchronization deviation $\Delta\theta$ of the R-phase signal VR with respect to the A-phase signal VA and the B-phase signal VB will be described. FIG. 11 is a block diagram schematically illustrating a configuration of the signal generation device 1A according to the second embodiment. In the second embodiment exemplified below, components common to those of the first embodiment are denoted by the same reference numerals as those used in the first embodiment, and detailed description thereof will be omitted as appropriate.

As illustrated in FIG. 11, the signal generation device 1A includes a sensor unit 10, a processing device 20A, a filter circuit 50A, and an output circuit 60A. The sensor unit 10 is similar in configuration to that in the first embodiment, so that description of the sensor unit 10 is omitted.

The processing device 20A includes a main MPU 30A and a sub MPU 40A. The main MPU 30A is identical to the main MPU 30 of the first embodiment in that angle information indicating a mechanical angle of a rotary shaft, or the angle estimation value $\theta$est is calculated based on magnetic flux detection signals Hu, Hv, and Hw output from the sensor unit 10, and the A-phase signal VA and the B-phase signal VB are generated based on a calculation result of the angle estimation value $\theta$est. In contrast, the main MPU 30A is different from the main MPU 30 of the first embodiment in generating the R-phase signal VR in addition to the A-phase signal VA and the B-phase signal VB.

The sub MPU 40A is identical to the sub MPU 40 of the first embodiment in generating the C-phase signal VC and the D-phase signal VD based on the calculation result of the angle estimation value $\theta$est transmitted from the main MPU 30A. In contrast, the sub MPU 40A is different from the sub MPU 40 of the first embodiment in not generating the R-phase signal VR.

The filter circuit 50A is identical to the filter circuit 50 of the first embodiment in including a first low-pass filter 51, a second low-pass filter 52, a third low-pass filter 53, and a fourth low-pass filter 54. In contrast, the filter circuit 50A is different from the filter circuit 50 of the first embodiment in that a fifth low-pass filter 55 is not provided.

The output circuit 60A is identical to the output circuit 60 of the first embodiment in including a first differential output circuit 61, a second differential output circuit 62, a third differential output circuit 63, and a fourth differential output circuit 64. In contrast, the output circuit 60A is different from the output circuit 60 of the first embodiment in including a fifth differential output circuit 65A that generates a differential signal of the R-phase signal VR output from the main MPU 30A instead of the fifth differential output circuit 65 of the first embodiment.

The main MPU 30A is identical to the main MPU 30 of the first embodiment in including an A/D converter 31, a timer 32, a first storage unit 34, a first D/A converter 35, and a first communication I/F 36. In contrast, the main MPU 30A is different from the main MPU 30 of the first embodiment in including a first calculation unit 33A instead of the first calculation unit 33 of the first embodiment. The main MPU 30A is different from the main MPU 30 of the first embodiment in further including a calculation circuit 37, a switch 38, and an output port 39.

The first calculation unit 33A has at least the same function as the first calculation unit 33 of the first embodiment. That is, when receiving an interrupt signal INT from the timer 32, the first calculation unit 33A executes interrupt processing of calculating the angle estimation value $\theta$est as angle information based on digital data on the magnetic flux detection signals Hu, Hv, and Hw received from the A/D converter 31. The first calculation unit 33A generates an A-phase digital signal DVA and a B-phase digital signal DVB based on the calculation result of the angle estimation value $\theta$est and outputs the A-phase digital signal DVA and the B-phase digital signal DVB to the first D/A converter 35 during execution of the interrupt processing. The first calculation unit 33A also transmits digital data indicating the calculation result of the angle estimation value $\theta$est to the sub MPU 40A via the first communication I/F 36 during the execution of the interrupt processing. The functions of the first calculation unit 33A as described above have been described in the first embodiment, so that description thereof in the second embodiment will be omitted.

Although details will be described later, the first calculation unit 33A has a function of controlling the switch 38 in addition to the above-described functions.

The calculation circuit 37 adds or multiplies the A-phase signal VA output from the first low-pass filter 51 and the B-phase signal VB output from the second low-pass filter 52. For example, the calculation circuit 37 is an analog addition circuit or an analog multiplication circuit. Configurations of the analog adder circuit and the analog multiplier circuit are generally well known. Thus, a detailed description of the configuration of the calculation circuit 37 is omitted.

The output port 39 is a port through which an output signal VR0 of the calculation circuit 37 is output as the R-phase signal VR. The output port 39 is electrically connected to an input terminal of the fifth differential output circuit 65A, and the fifth differential output circuit 65A receives the R-phase signal VR output through the output port 39.

The switch 38 electrically connects the calculation circuit 37 and the output port 39 when the angle estimation value $\theta$est indicates a mechanical angle in a range from a first mechanical angle $\Theta$1 to a second mechanical angle $\Theta$2. In other words, the first calculation unit 33A causes the switch 38 to be turned on when the angle estimation value $\theta$est indicates the mechanical angle in the range from the first mechanical angle $\Theta$1 to the second mechanical angle $\Theta$2. As a result, the calculation circuit 37 and the output port 39 are electrically connected, and the calculation circuit 37 outputs the output signal VR0 through the output port 39 as the R-phase signal VR.

FIG. 12 is a diagram illustrating an example of waveforms of the A-phase signal VA, the B-phase signal VB, and the output signal VR0 of the calculation circuit 37 in the second embodiment. FIG. 12 illustrates a signal obtained by adding the A-phase signal VA and the B-phase signal VB as an example of the output signal VR0 of the calculation circuit 37.

As illustrated in FIG. 12, when the angle estimation value θest indicates a mechanical angle of 0 degrees, a mechanical angle corresponding to a vertex P40 of the output signal VR0 of the calculation circuit 37 is substantially equal to a mechanical angle corresponding to the intersection point P20 of the A-phase signal VA and the B-phase signal VB. That is, using the output signal VR0 of the calculation circuit 37 as the R-phase signal VR enables suppressing the synchronization deviation Δθ of the R-phase signal VR with respect to the A-phase signal VA and the B-phase signal VB to substantially zero.

However, as understood from FIG. 12, when the output signal VR0 of the calculation circuit 37 is used as the R-phase signal VR over the entire one cycle of the mechanical angle, the R-phase signal VR, in which a waveform being bilaterally symmetrical within a range of ±α degrees about 0 degrees appears once as illustrated in FIG. 7, cannot be obtained. Thus, the first calculation unit 33A causes the switch 38 to be turned on when the angle estimation value θest indicates the mechanical angle in the range from the first mechanical angle Θ1 to the second mechanical angle Θ2 as described above. As a result, the output signal VR0 of the calculation circuit 37 is output through the output port 39 as the R-phase signal VR only during a period in which the mechanical angle is in the range from the first mechanical angle Θ1 to the second mechanical angle Θ2.

FIG. 13 is a diagram illustrating an example of waveforms of the A-phase signal VA, the B-phase signal VB, and the R-phase signal VR output through the output port 39 in the second embodiment. As illustrated in FIG. 13, the output signal VR0 of the calculation circuit 37 is output from the output port 39 as the R-phase signal VR only during a period in which the mechanical angle is in the range from the first mechanical angle Θ1 to the second mechanical angle Θ2, so that the R-phase signal VR, in which a waveform being bilaterally symmetrical within a range of ±α degrees about 0 degrees appears once, can be obtained. For example, when α is 0.17578 (deg) as expressed by Expression (9) above, the first mechanical angle Θ1 may be set to 359.82422 (deg), and the second mechanical angle Θ2 may be set to 0.17578 (deg).

As described above, the second embodiment enables providing the signal generation device 1A capable of reducing the synchronization deviation Δθ of the R-phase signal VR with respect to the A-phase signal VA and the B-phase signal VB.

Hereinafter, the description will be continued while returning to FIG. 11. The sub MPU 40A is identical to the sub MPU 40 of the first embodiment in including the second communication I/F 41 and the second storage unit 43. In contrast, the sub MPU 40A is different from the sub MPU 40 of the first embodiment in including a second calculation unit 42A and a second D/A converter 44A instead of the second calculation unit 42 and the second D/A converter 44 of the first embodiment.

The second calculation unit 42A is identical to the second calculation unit 42 of the first embodiment in having a function of generating the C-phase digital signal DVC and the D-phase digital signal DVD based on the calculation result of the angle estimation value θest received from the main MPU 30A via the second communication I/F 41 and of outputting the C-phase digital signal DVC and the D-phase digital signal DVD to the second D/A converter 44A. In contrast, the second calculation unit 42A is different from the second calculation unit 42 of the first embodiment in not having a function of generating the instantaneous value Vr of the R-phase signal VR, or the R-phase digital signal DVR, based on a predetermined function such as a sigmoid function.

The second D/A converter 44A is different from the second D/A converter 44 of the first embodiment in being a two-channel D/A converter. The second D/A converter 44A generates the C-phase signal VC by converting the C-phase digital signal DVC output from the second calculation unit 42A into an analog signal. The second D/A converter 44A generates the D-phase signal VD by converting the D-phase digital signal DVD output from the second calculation unit 42A into an analog signal.

As described above, the second embodiment enables reduction in calculation load (calculation time, memory size, and the like) of the second calculation unit 42A, improvement in real-time property, and reduction in cost of the sub MPU 40A because the second calculation unit 42A of the sub MPU 40A is not required to calculate the instantaneous value Vr of the R-phase signal VR based on the predetermined function. Additionally, the second embodiment enables cost reduction of the sub MPU 40A as compared with the first embodiment in which a three-channel D/A converter is used as the second D/A converter 44 because a two-channel D/A converter can be used as the second D/A converter 44A of the sub MPU 40A.

[Modifications]

The present invention is not limited to the above embodiments, and the configurations described herein can be appropriately combined within a range not conflicting with one another.

For example, the first embodiment exemplifies an aspect in which the processing device 20 includes the first processing device 30 that calculates angle information and generates the A-phase signal VA and the B-phase signal VB based on a calculation result of the angle information, and the second processing device 40 that generates the C-phase signal VC, the D-phase signal VD, and the R-phase signal VR based on the calculation result of the angle information obtained from the first processing device 30.

The present invention is not limited thereto, and when the C-phase signal VC and the D-phase signal VD are unnecessary, for example, the processing device may include a first processing device that calculates angle information and generates the A-phase signal VA and the B-phase signal VB based on the calculation result of the angle information, and a second processing device that generates the R-phase signal VR based on the calculation result of the angle information obtained from the first processing device. This configuration enables an inexpensive general-purpose microcomputer having a two-channel D/A converter to be used as the first processing device and the second processing device.

Alternatively, an inexpensive general-purpose microcomputer having a three-channel D/A converter may be used as the processing device to generate the A-phase signal VA, the B-phase signal VB, and the R-phase signal VR using the processing device alone. When an inexpensive general-purpose microcomputer having a five-channel D/A converter can be used as the processing device, all of the A-phase signal VA, the B-phase signal VB, the C-phase signal VC, the D-phase signal VD, and the R-phase signal VR may be generated by the processing device alone. When the R-phase signal VR is unnecessary, the processing device may include a first processing device that generates the A-phase signal VA and the B-phase signal VB, and a second processing device that generates the C-phase signal VC and the D-phase signal VD. When the C-phase signal VC, the D-phase signal VD, and the R-phase signal VR are unnecessary, an inexpensive general-purpose microcomputer having a two-channel D/A converter may be used as the processing device to generate the A-phase signal VA and the B-phase signal VB using the processing device alone.

Although the first and second embodiments each exemplify an aspect in which the three magnetic sensors 11, 12, and 13 are used, the magnetic sensors may be appropriately changed in type, number, placement, and the like in accordance with a type of the rotary shaft or contents of an angle calculation algorithm.

[Application examples]

FIG. 14 is a diagram schematically illustrating an appearance of an elevator 100 that is an application example of the present invention. The elevator 100 includes a car 120 suspended by a rope 110, a hoisting machine 130 that raises the car 120 by winding up the rope 110, and a signal generation device (not illustrated) that calculates angle information indicating a mechanical angle of a rotary shaft of the hoisting machine 130 and that generates at least a first signal and a second signal based on a calculation result of the angle information. As the signal generation device, the signal generation device 1 of the first embodiment or the signal generation device 1A of the second embodiment can be used.

The application example of the present invention is not limited to the elevator 100, and the present invention can be widely applied to a device driven by a motor such as a robot, for example.

The present technique can have configurations below.

(1) A signal generation device including a processing device that calculates angle information indicating a mechanical angle of a rotary shaft, and generates a first signal in which a waveform of one electrical angle cycle appears N times (N is an integer of one or more) in one mechanical angle cycle, and a second signal different in phase by 90 degrees in electrical angle from the first signal, based on a calculation result of the angle information.

(2) The signal generation device according to item (1), further including: a first low-pass filter provided in a transmission path of the first signal output from the processing device; and a second low-pass filter provided in a transmission path of the second signal output from the processing device.

(3) The signal generation device according to item (2), further including: a first differential output circuit that generates a differential signal of the first signal output from the first low-pass filter; and a second differential output circuit that generates a differential signal of the second signal output from the second low-pass filter.

(4) The signal generation device according to any one of items (1) to (3), in which the processing device further generates a third signal in which a waveform of one electrical angle cycle appears once in the one mechanical angle cycle, and a fourth signal different in phase by 90 degrees in electrical angle from the third signal, based on the calculation result of the angle information.

(5) The signal generation device according to item (4), further including: a third low-pass filter provided in a transmission path of the third signal output from the processing device; and a fourth low-pass filter provided in a transmission path of the fourth signal output from the processing device.

(6) The signal generation device according to item (5), further including: a third differential output circuit that generates a differential signal of the third signal output from the third low-pass filter; and a fourth differential output circuit that generates a differential signal of the fourth signal output from the fourth low-pass filter.

(7) The signal generation device according to any one of items (1) to (3), in which the processing device further generates a fifth signal indicating a reference position of the one mechanical angle cycle based on the calculation result of the angle information.

(8) The signal generation device according to item (7), in which the processing device includes: a first processing device that calculates the angle information and generates the first signal and the second signal based on the calculation result of the angle information; and a second processing device that generates the fifth signal based on the calculation result of the angle information obtained from the first processing device.

(9) The signal generation device according to any one of items (4) to (6), in which the processing device further generates a fifth signal indicating a reference position of the one mechanical angle cycle based on the calculation result of the angle information.

(10) The signal generation device according to item (9), in which the processing device includes: a first processing device that calculates the angle information and generates the first signal and the second signal based on the calculation result of the angle information; and a second processing device that generates the third signal, the fourth signal, and the fifth signal based on the calculation result of the angle information obtained from the first processing device.

(11) The signal generation device according to item (8) or (10), in which the first processing device and the second processing device communicate the calculation result of the angle information to each other.

(12) The signal generation device according to any one of items (7) to (11), further including a fifth low-pass filter provided in a transmission path of the fifth signal output from the processing device.

(13) The signal generation device according to item (12), further including a fifth differential output circuit that generates a differential signal of the fifth signal output from the fifth low-pass filter.

(14) The signal generation device according to item (2) or (3), in which the processing device includes: a calculation circuit that adds or multiplies the first signal output from the first low-pass filter and the second signal output from the second low-pass filter; an output port through which an output signal of the calculation circuit is output as a fifth signal; and a switch that electrically connects the calculation circuit and the output port when the mechanical angle indicated by the angle information is in a range from a first mechanical angle to a second mechanical angle.

(15) The signal generation device according to item (14), further including a fifth differential output circuit that generates a differential signal of the fifth signal output through the output port.

(16) The signal generation device according to any one of items (1) to (15), further including a plurality of magnetic sensors that detects a change in magnetic flux due to rotation of the rotary shaft, in which the processing device calculates the angle information based on signals output from the plurality of magnetic sensors.

(17) An elevator including: a car suspended by a rope; a hoisting machine that raises the car by hoisting the rope; and the signal generation device according to any one of items (1) to (16) that calculates angle information indicating a mechanical angle of a rotary shaft of the hoisting machine and generates at least the first signal and the second signal based on a calculation result of the angle information.

INDUSTRIAL APPLICABILITY

An aspect of the present invention provides a signal generation device capable of generating at least a first signal and a second signal with a simple and low-cost configuration as compared with a conventional optical encoder, and an elevator including the signal generation device. Thus, the present invention has industrial applicability.

REFERENCE SIGNS LIST

1, 1A signal generation device
10 sensor unit
11, 12, 13 magnetic sensor
20, 20A processing device
30, 30A main MPU (first processing device)
31 A/D converter
32 timer
33, 33A first calculation unit
34 first storage unit
35 first D/A converter
36 first communication I/F
37 calculation circuit

38 switch
39 output port
40, 40A sub MPU (second processing device)
41 second communication I/F
42, 42A second calculation unit
43 second storage unit
44, 44A second D/A converter
50, 50A filter circuit
51 first low-pass filter
52 second low-pass filter
53 third low-pass filter
54 fourth low-pass filter
55 fifth low-pass filter
60, 60A output circuit
61 first differential output circuit
62 second differential output circuit
63 third differential output circuit
64 fourth differential output circuit
65, 65A fifth differential output circuit
100 elevator
110 rope
120 car
130 hoisting machine

## Claims

**1.** A signal generation device comprising:
a processing device that calculates angle information indicating a mechanical angle of a rotary shaft, and generates a first signal in which a waveform of one electrical angle cycle appears N times (N is an integer of one or more) in one mechanical angle cycle, and a second signal different in phase by 90 degrees in electrical angle from the first signal, based on a calculation result of the angle information.

**2.** The signal generation device according to claim 1, further comprising:

a first low-pass filter provided in a transmission path of the first signal output from the processing device; and
a second low-pass filter provided in a transmission path of the second signal output from the processing device.

**3.** The signal generation device according to claim 2, further comprising:

a first differential output circuit that generates a differential signal of the first signal output from the first low-pass filter; and
a second differential output circuit that generates a differential signal of the second signal output from the second low-pass filter.

**4.** The signal generation device according to any one of claims 1 to 3, wherein the processing device further generates a third signal in which a waveform of one electrical angle cycle appears once in the one mechanical angle cycle, and a fourth signal different in phase by 90 degrees in electrical angle from the third signal, based on the calculation result of the angle information.

**5.** The signal generation device according to claim 4, further comprising:

a third low-pass filter provided in a transmission path of the third signal output from the processing device; and
a fourth low-pass filter provided in a transmission path of the fourth signal output from the processing device.

**6.** The signal generation device according to claim 5, further comprising:

a third differential output circuit that generates a differential signal of the third signal output from the third low-pass filter; and
a fourth differential output circuit that generates a differential signal of the fourth signal output from the fourth low-pass filter.

**7.** The signal generation device according to any one of claims 1 to 3, wherein the processing device further generates a fifth signal indicating a reference position of the one mechanical angle cycle based on the calculation result of the angle information.

**8.** The signal generation device according to claim 7, wherein
the processing device includes:

a first processing device that calculates the angle information and generates the first signal and the second signal based on the calculation result of the angle information; and
a second processing device that generates the fifth signal based on the calculation result of the angle information obtained from the first processing device.

**9.** The signal generation device according to claim 4, wherein the processing device further generates a fifth signal indicating a reference position of the one mechanical angle cycle based on the calculation result of the angle information.

**10.** The signal generation device according to claim 9, wherein
the processing device includes:

a first processing device that calculates the angle information and generates the first signal and the second signal based on the calculation result of the angle information; and
a second processing device that generates the third signal, the fourth signal, and the fifth signal based on the calculation result of the angle information obtained from the first processing device.

**11.** The signal generation device according to claim 8, wherein the first processing device and the second processing device communicate the calculation result of the angle information to each other.

**12.** The signal generation device according to claim 7, further comprising a fifth low-pass filter provided in a transmission path of the fifth signal output from the processing device.

**13.** The signal generation device according to claim 12, further comprising a fifth differential output circuit that generates a differential signal of the fifth signal output from the fifth low-pass filter.

**14.** The signal generation device according to claim 2, wherein
the processing device includes:

a calculation circuit that adds or multiplies the first signal output from the first low-pass filter and the second signal output from the second low-pass filter;
an output port through which an output signal of the calculation circuit is output as a fifth signal; and
a switch that electrically connects the calculation circuit and the output port when the mechanical angle indicated by the angle information is in a range from a first mechanical angle to a second mechanical angle.

**15.** The signal generation device according to claim 14, further comprising a fifth differential output circuit that generates a differential signal of the fifth signal output through the output port.

**16.** The signal generation device according to any one of claims 1 to 3, further comprising

a plurality of magnetic sensors that detects a change in magnetic flux due to rotation of the rotary shaft,
wherein the processing device calculates the angle information based on signals output from the plurality of magnetic sensors.

**17.** An elevator comprising:

a car suspended by a rope;

a hoisting machine that raises the car by hoisting the rope; and

the signal generation device according to any one of claims 1 to 3 that calculates angle information indicating a mechanical angle of a rotary shaft of the hoisting machine and generates at least the first signal and the second signal based on a calculation result of the angle information.

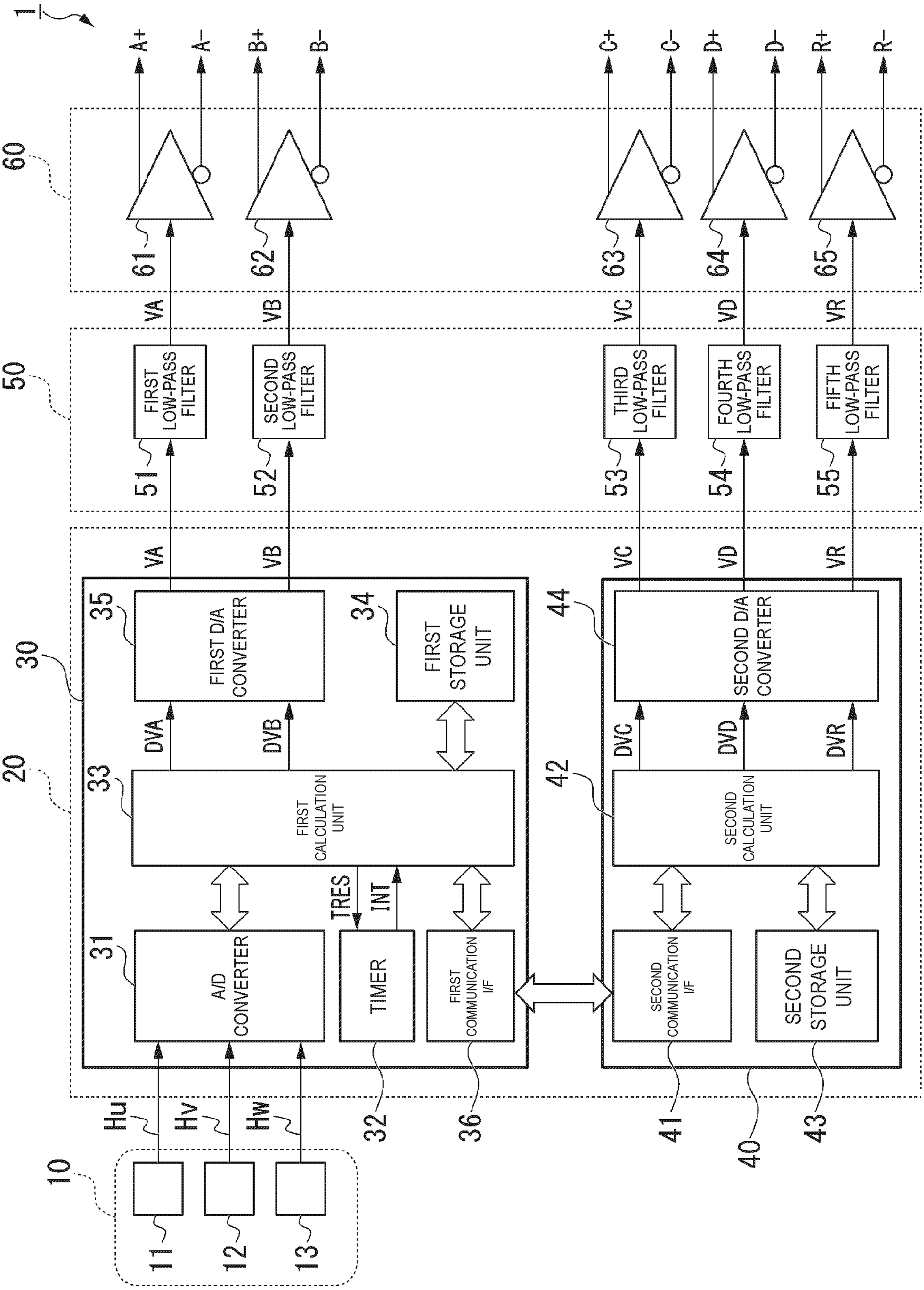
A/D CONVERTER
TIMER
FIRST COMMUNICATION I/F
FIRST CALCULATION UNIT
TRES
INT
FIRST D/A CONVERTER
FIRST STORAGE UNIT
DVA
DVB
VA
VB
SECOND COMMUNICATION I/F
SECOND STORAGE UNIT
SECOND CALCULATION UNIT
SECOND D/A CONVERTER
DVC
DVD
DVR
VC
VD
VR
FIRST LOW-PASS FILTER
SECOND LOW-PASS FILTER
THIRD LOW-PASS FILTER
FOURTH LOW-PASS FILTER
FIFTH LOW-PASS FILTER
A+
A-
B+
B-
C+
C-
D+
D-
R+
R-
Hu
Hv
Hw

Fig. 1

Fig. 2

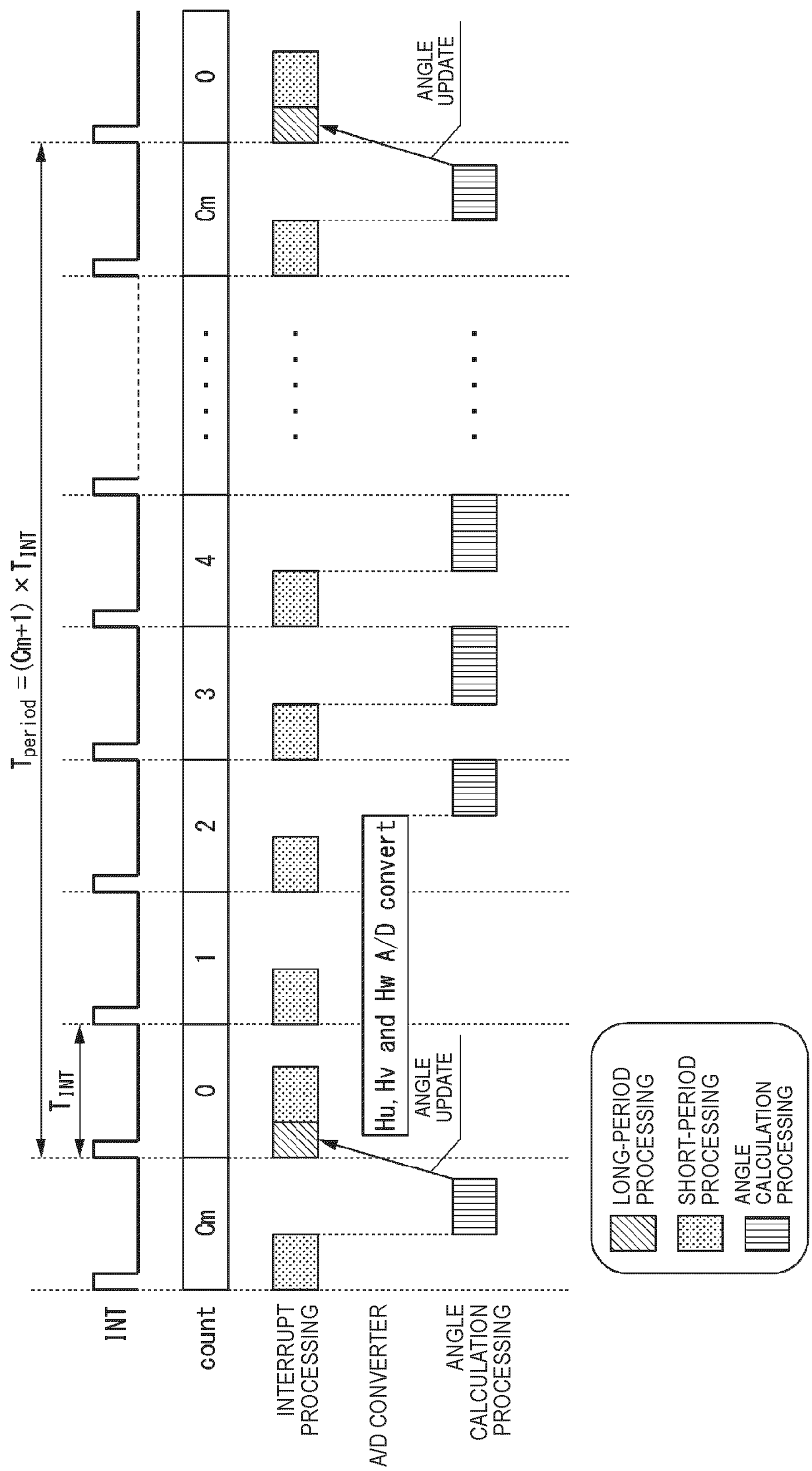
INT
count
INTERRUPT PROCESSING
A/D CONVERTER
ANGLE CALCULATION PROCESSING
Cm
0
1
2
3
4
Cm
0
$T_{INT}$
$T_{period} = (Cm+1) \times T_{INT}$
Hu, Hv and Hw A/D convert
ANGLE UPDATE
ANGLE UPDATE
LONG-PERIOD PROCESSING
SHORT-PERIOD PROCESSING
ANGLE CALCULATION PROCESSING

Fig. 3

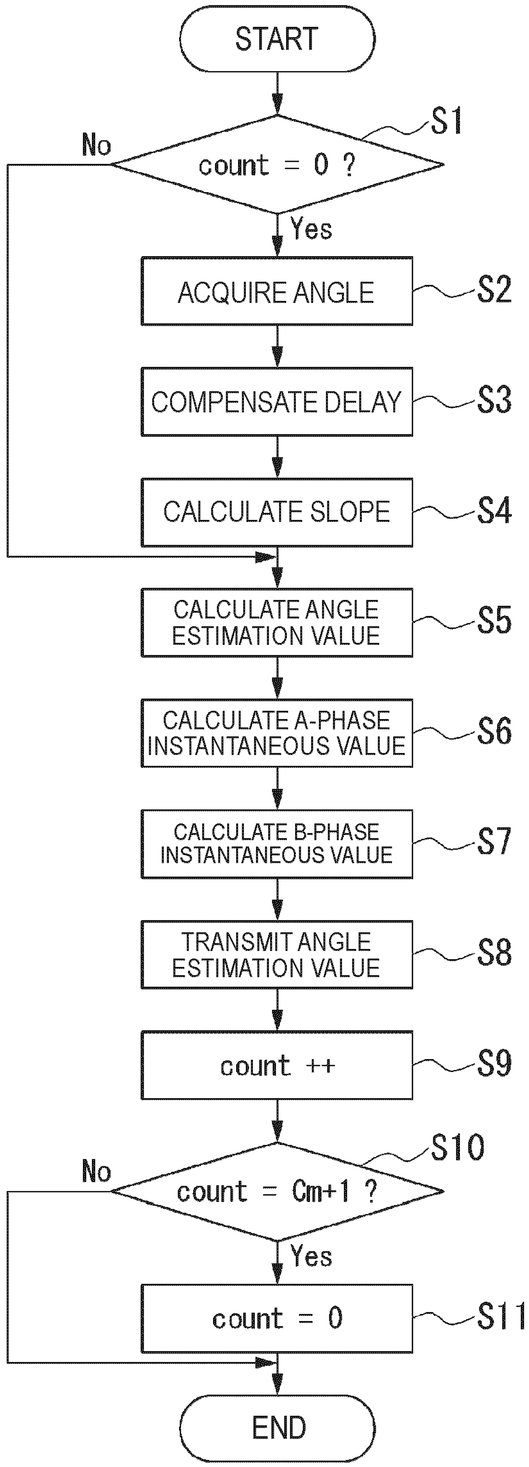
START
count = 0 ?
S1
No
Yes
ACQUIRE ANGLE
S2
COMPENSATE DELAY
S3
CALCULATE SLOPE
S4
CALCULATE ANGLE ESTIMATION VALUE
S5
CALCULATE A-PHASE INSTANTANEOUS VALUE
S6
CALCULATE B-PHASE INSTANTANEOUS VALUE
S7
TRANSMIT ANGLE ESTIMATION VALUE
S8
count ++
S9
count = Cm+1 ?
S10
No
Yes
count = 0
S11
END

Fig. 4

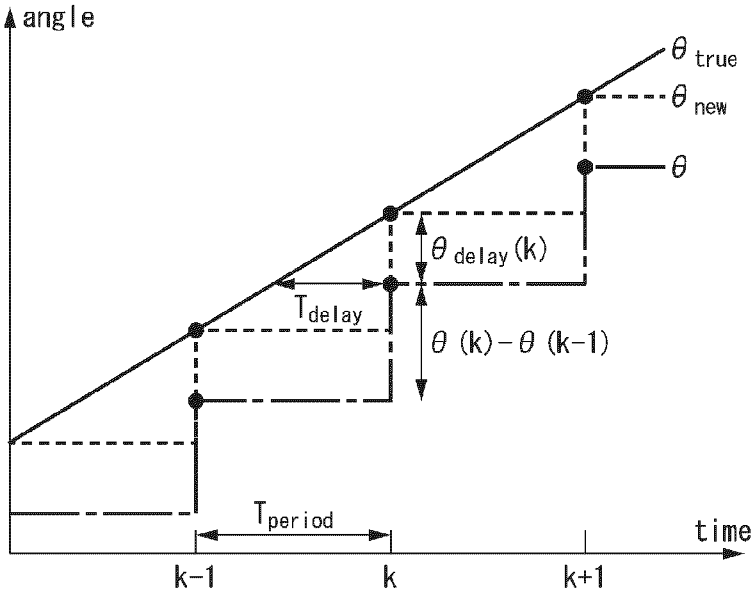
angle
θ true
θ new
θ
θ delay (k)
T delay
θ (k) − θ (k−1)
T period
time
k−1
k
k+1

Fig. 5

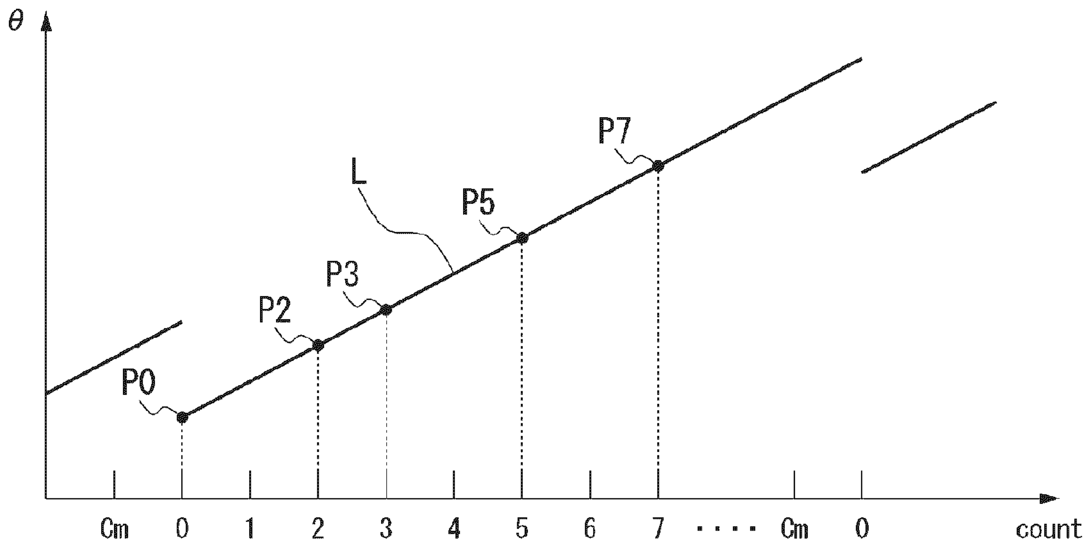
θ
P7
L
P5
P3
P2
P0
Cm
0
1
2
3
4
5
6
7
····
Cm
0
count

Fig. 6

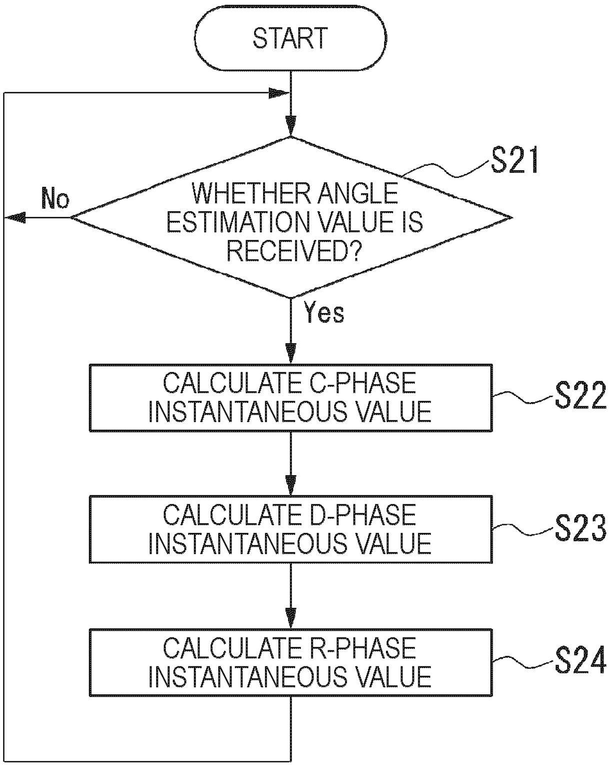
START
WHETHER ANGLE ESTIMATION VALUE IS RECEIVED?
S21
No
Yes
CALCULATE C-PHASE INSTANTANEOUS VALUE
S22
CALCULATE D-PHASE INSTANTANEOUS VALUE
S23
CALCULATE R-PHASE INSTANTANEOUS VALUE
S24

Fig. 7

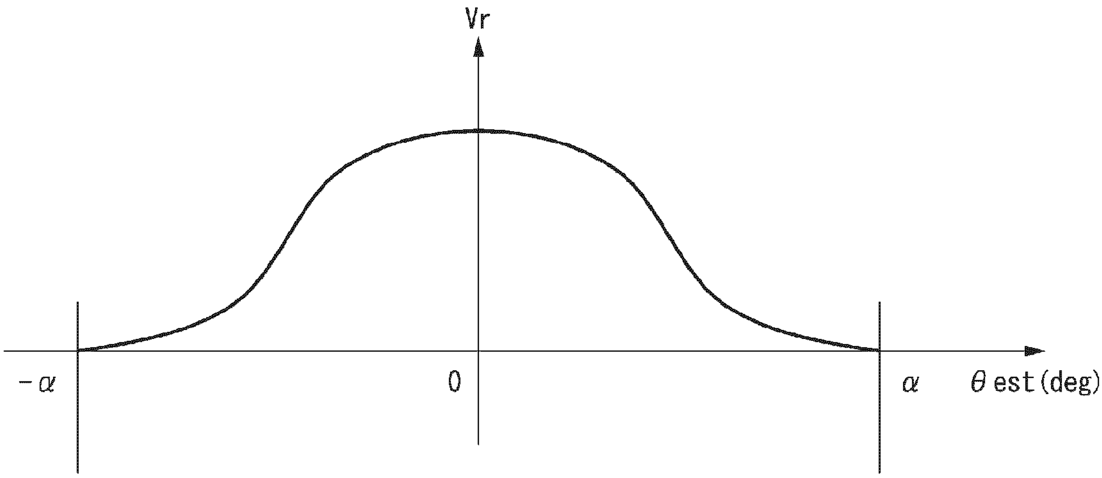
Vr
−α
0
α
θ est (deg)

Fig. 8

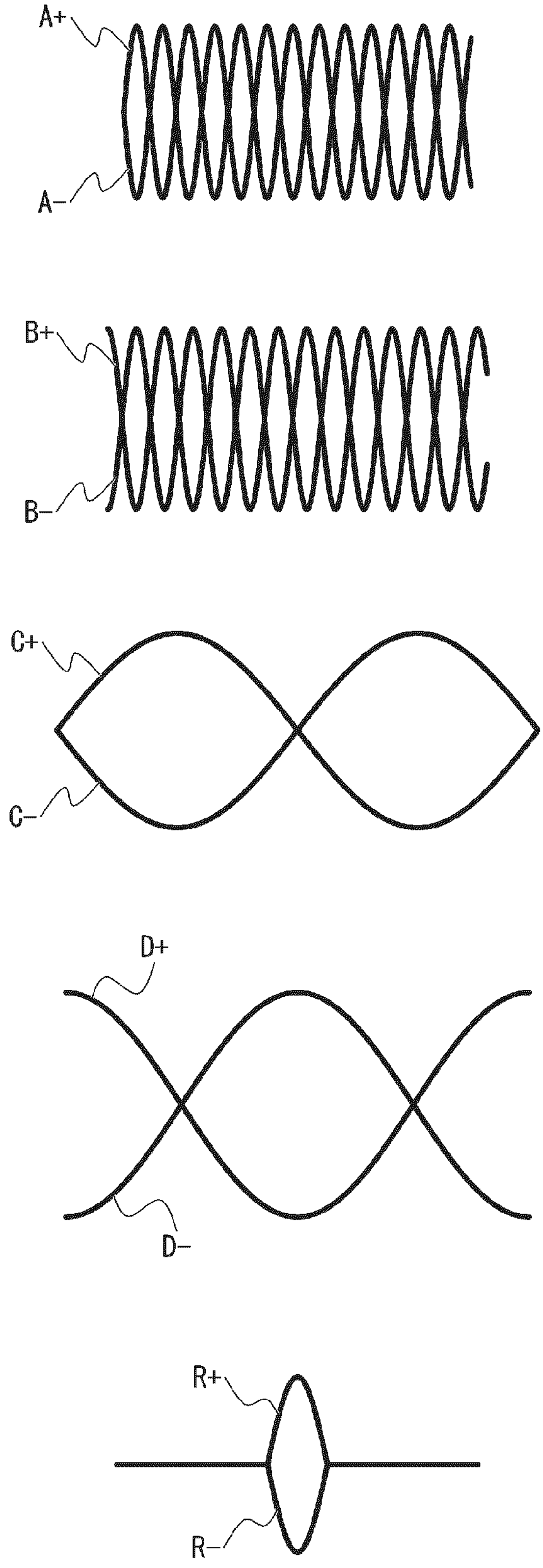

Fig. 9

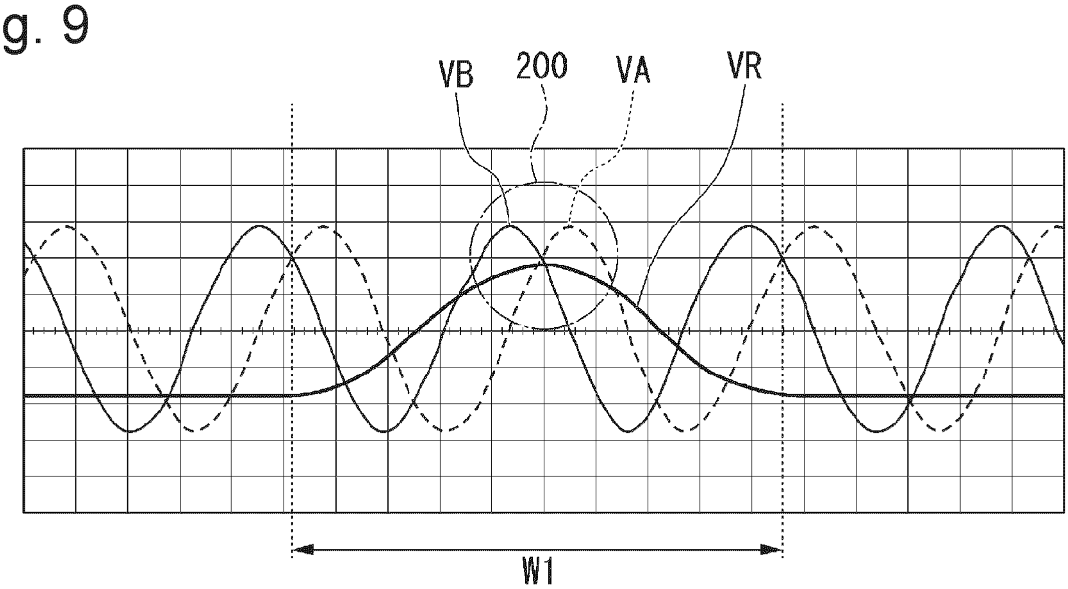


Fig. 10

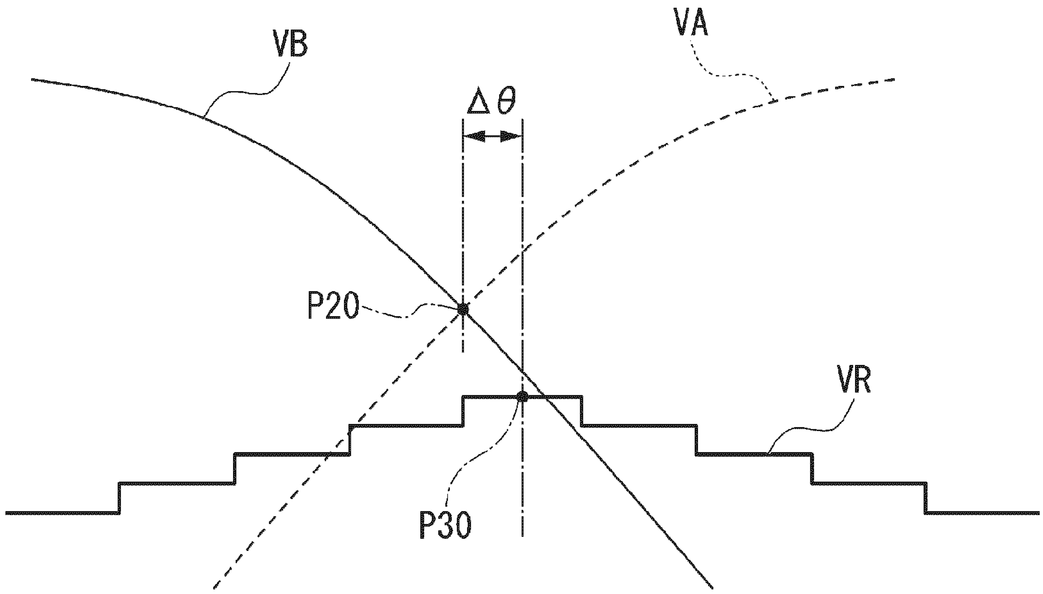

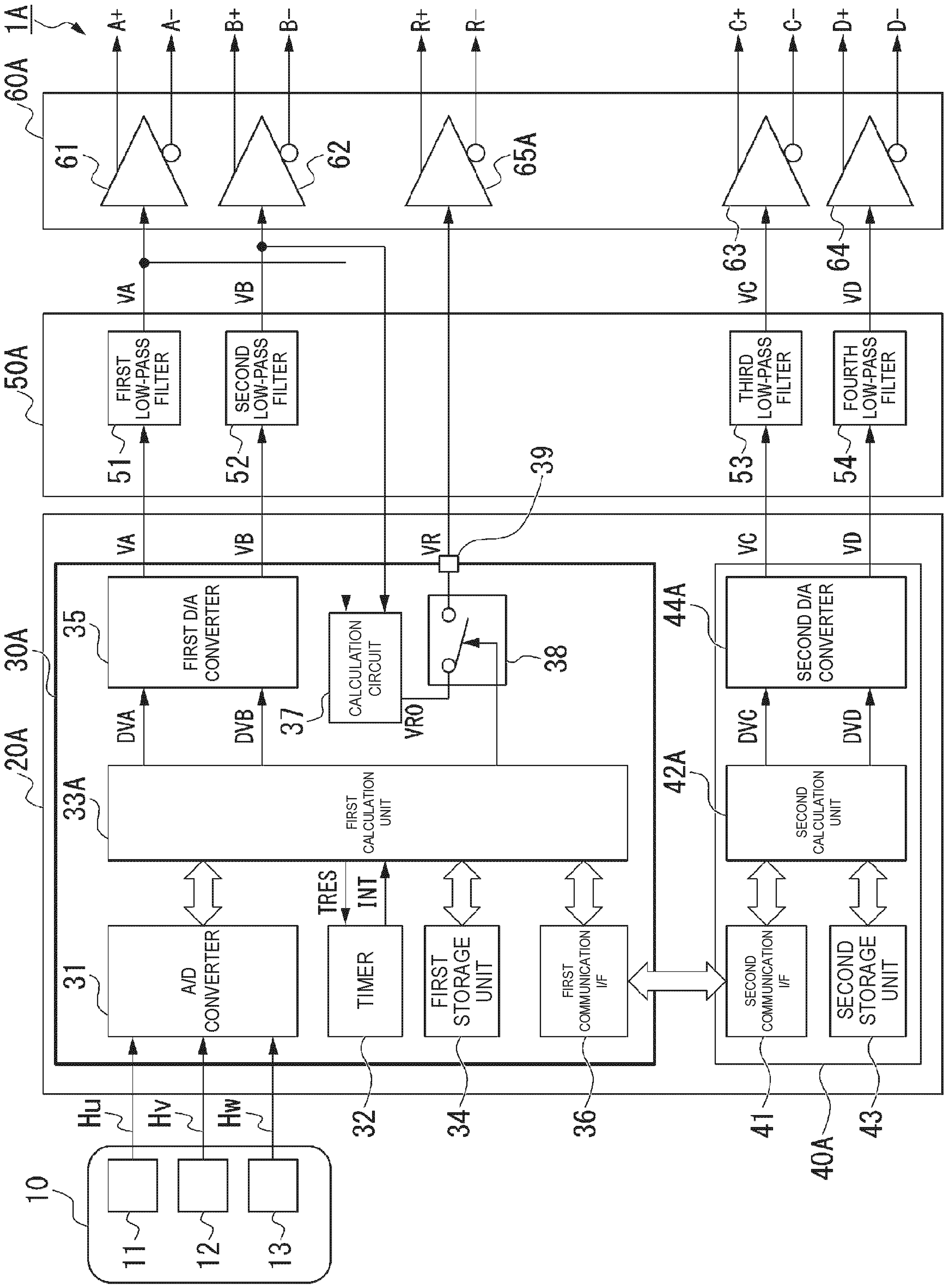
1A
60A
A+
A−
B+
B−
R+
R−
C+
C−
D+
D−
61
62
65A
63
64
VA
VB
VC
VD
50A
FIRST LOW-PASS FILTER
SECOND LOW-PASS FILTER
THIRD LOW-PASS FILTER
FOURTH LOW-PASS FILTER
51
52
53
54
39
20A
30A
35
FIRST D/A CONVERTER
VR
CALCULATION CIRCUIT
37
VR0
38
DVA
DVB
33A
FIRST CALCULATION UNIT
TRES
INT
31
A/D CONVERTER
TIMER
FIRST STORAGE UNIT
FIRST COMMUNICATION I/F
32
34
36
44A
SECOND D/A CONVERTER
DVC
DVD
42A
SECOND CALCULATION UNIT
SECOND COMMUNICATION I/F
SECOND STORAGE UNIT
41
40A
43
Hu
Hv
Hw
10
11
12
13

Fig. 11

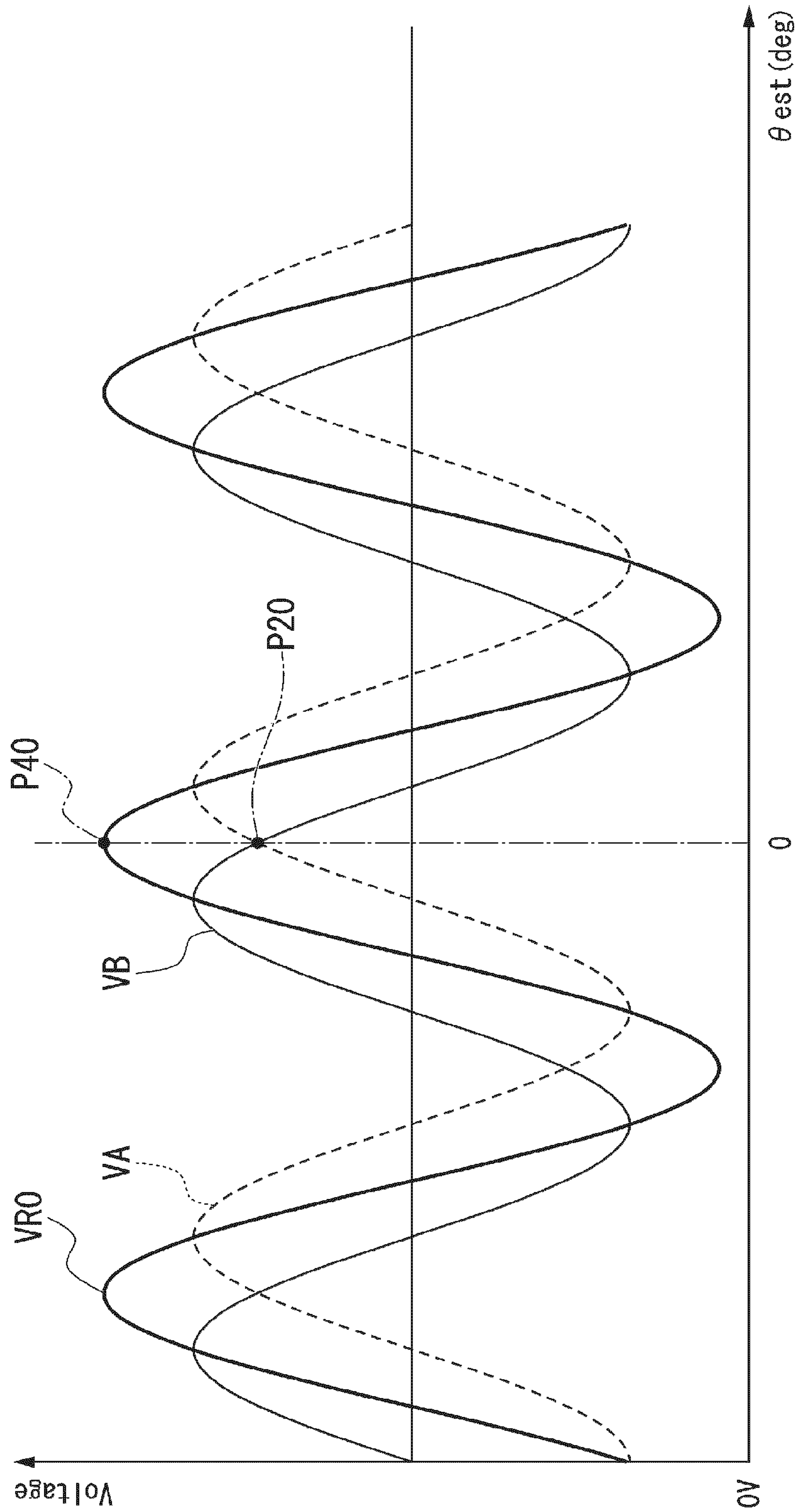


Fig. 12

Fig. 13

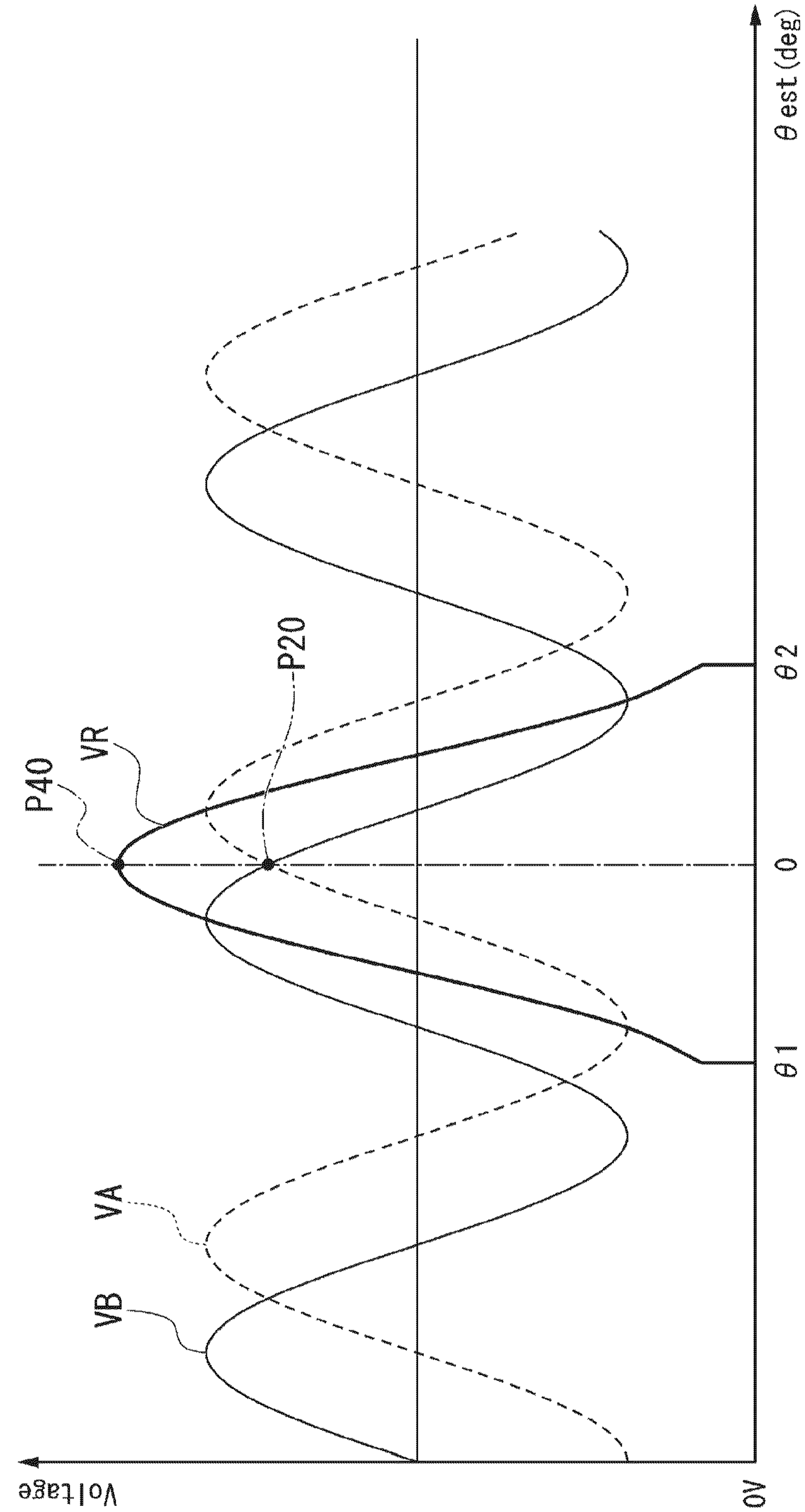

Fig. 14

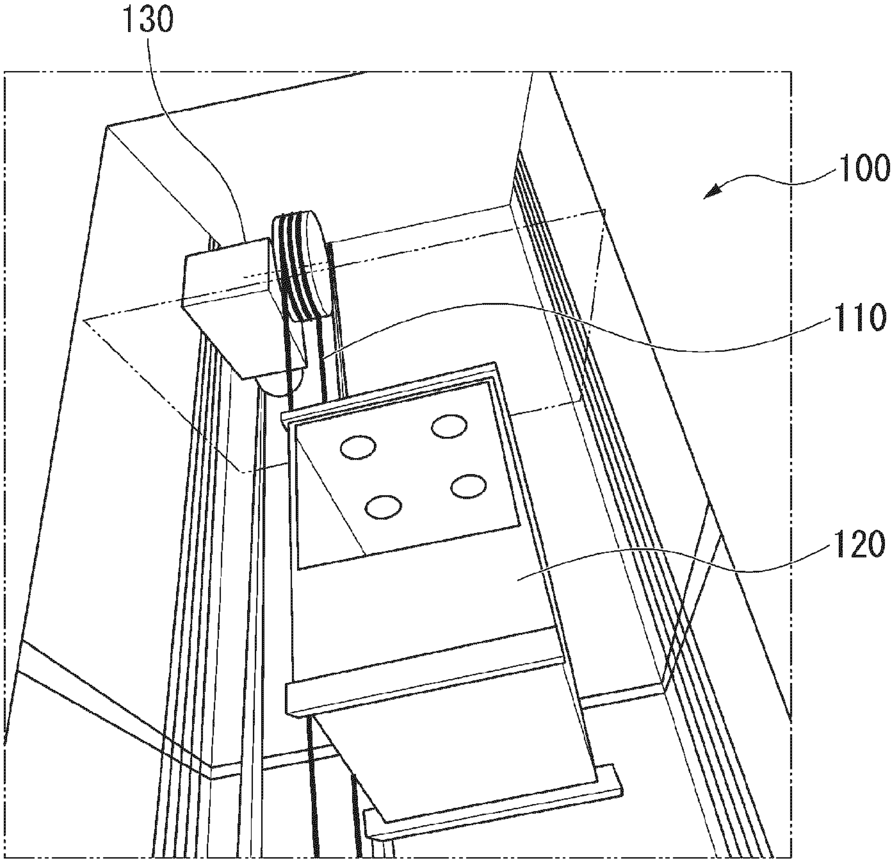

## INTERNATIONAL SEARCH REPORT

International application No.
**PCT/JP2022/044003**

**A. CLASSIFICATION OF SUBJECT MATTER**

***G01D 5/244***(2006.01)i; ***B66B 3/02***(2006.01)i; ***G01B 7/30***(2006.01)i; ***G05B 11/36***(2006.01)i
FI: G01D5/244 J; G01B7/30 H; G05B11/36 B; B66B3/02 S

According to International Patent Classification (IPC) or to both national classification and IPC

**B. FIELDS SEARCHED**

Minimum documentation searched (classification system followed by classification symbols)

G01D5/00-5/252; G01B7/00-7/34; B66B1/00-1/52; B66B3/02; G05B11/36; H02K11/00-11/40; H02K29/00-29/14; H02P6/00-6/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2013-205144 A (NIDEC SANKYO CORP.) 07 October 2013 (2013-10-07) paragraphs [0024]-[0049], fig. 1-3 | 1-6, 16-17<br>7-15 |
| Y | WO 2021/090372 A1 (IGARASHI ELECTRIC WORKS LTD.) 14 May 2021 (2021-05-14) paragraphs [0013]-[0046], fig. 1-8 | 1-6, 16-17 |
| Y | JP 7-174588 A (FUTABA CORP.) 14 July 1995 (1995-07-14) paragraphs [0017]-[0024], fig. 1-3 | 2-6, 16-17 |
| Y | JP 2007-71865 A (MITSUTOYO CORP.) 22 March 2007 (2007-03-22) paragraphs [0002]-[0005], fig. 1-4 | 3-6, 16-17 |
| Y | JP 2000-171239 A (NTN CORP.) 23 June 2000 (2000-06-23) paragraphs [0011], [0026]-[0060], fig. 1-5 | 4-6 |
| Y | WO 2021/186680 A1 (MITSUBISHI ELECTRIC CORP.) 23 September 2021 (2021-09-23) paragraphs [0010]-[0015], fig. 1 | 17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/044003**

**C. DOCUMENTS CONSIDERED TO BE RELEVANT**

| Category* | Citation of document, with indication, where appropriate, of the relevant passages | Relevant to claim No. |
|---|---|---|
| A | JP 11-178303 A (SANKYO SEIKI MFG. CO., LTD.) 02 July 1999 (1999-07-02) paragraphs [0006]-[0075], fig. 1-7 | 1-17 |

Form PCT/ISA/210 (second sheet) (January 2015)

**INTERNATIONAL SEARCH REPORT**
**Information on patent family members**

International application No.
**PCT/JP2022/044003**

| Patent document cited in search report | Publication date (day/month/year) | Patent family member(s) | Publication date (day/month/year) |
|---|---|---|---|
| JP 2013-205144 A | 07 October 2013 | (Family: none) | |
| WO 2021/090372 A1 | 14 May 2021 | US 2022/0260971 A1<br>paragraphs [0018]-[0103], fig. 1-8<br>EP 3865828 A1<br>KR 10-2021-0056948 A<br>TW 202122756 A<br>JP 6842736 B1 | |
| JP 7-174588 A | 14 July 1995 | (Family: none) | |
| JP 2007-71865 A | 22 March 2007 | US 2007/0035417 A1<br>paragraphs [0005]-[0008], fig. 1-4<br>EP 1752740 A1<br>CN 1912549 A | |
| JP 2000-171239 A | 23 June 2000 | (Family: none) | |
| WO 2021/186680 A1 | 23 September 2021 | CN 115210161 A | |
| JP 11-178303 A | 02 July 1999 | US 6243023 B1<br>column 2, line 24 to column 11, line 23, fig. 1-7 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021194064 A
- JP S63070116 A
- JP H09218053 A
- JP 6233532 B